# EUROPEAN PATENT SPECIFICATION

(11) **EP 2 479 968 B1**
(45) Date of publication and mention of the grant of the patent: **14.06.2017**
(21) Application number: 10826107.4
(22) Date of filing: 29.10.2010
(51) Int. Cl.: H04M 3/06, H04M 3/42, H04M 7/00

(54) **METHOD FOR PLAYING MULTIMEDIA RING TONE DURING CONVERSATION PERIOD, SERVER AND TERMINAL DEVICE THEREOF**
VERFAHREN ZUM ABSPIELEN VON MULTIMEDIA-KLINGELTÖNEN WÄHREND EINER KONVERSATIONSPERIODE SOWIE SERVER UND ENDGERÄT DAFÜR
PROCÉDÉ DE LECTURE DE SONNERIE MULTIMÉDIA DURANT UNE PÉRIODE DE CONVERSATION, SERVEUR ET DISPOSITIF TERMINAL CORRESPONDANTS

(30) Priority: 31.10.2009 CN 200910211356
(43) Date of publication of application: 25.07.2012
(73) Proprietor: Huawei Device Co., Ltd., Longgang District Shenzhen Guangdong 518129 (CN)
(72) Inventor: GAO, Wenmei, Guangdong 518129 (CN); CHEN, Guoqiao, Guangdong 518129 (CN); ZHANG, Huiping, Guangdong 518129 (CN); YANG, Jian, Guangdong 518129 (CN); FAN, Shunan, Guangdong 518129 (CN); WANG, Lei, Guangdong 518129 (CN); LI, Li, Guangdong 518129 (CN); SUN, Ruinan, Guangdong 518129 (CN)
(74) Representative: Kreuz, Georg Maria
(86) International application number: PCT/CN2010/078233
(87) International publication number: WO 2011/050744

(56) References cited:
- CN-A- 1 801 861
- CN-A- 1 822 619
- CN-A- 1 859 493
- CN-A- 101 478 610
- CN-A- 101 764 802
- KR-A- 20040 093 836

## Description

### FIELD OF THE INVENTION

The present invention relates to the field of multimedia ring tones, and in particular, to a method, a server and a terminal device for playing a multimedia ring tone during a call.

### BACKGROUND OF THE INVENTION

At present, multimedia ring tone services mainly include: a Customized Alerting Tone (CAT), a Customized Ringing Signal (CRS), and a Customized Background Tone (CBT). The CAT is also referred to as a Multimedia Ring Back Tone (MRBT), which is the CAT enjoyed by a calling party before a called party answers a call made by the calling party. The CRS is also referred to as a multimedia ringing tone, which is the CRS enjoyed by a called party before the called party answers a call made by a calling party. The CBT is also referred to as a multimedia background tone, which is the CBT enjoyed by both a calling party and a called party during a call between the calling party and the called party. Contents of the multimedia ring tone may be media contents of various types such as music, a video, a picture, a text, an electronic business card, and even audio/video clips uploaded by a user.

A method, a server and a terminal device for playing a multimedia ring tone during a call are provided according to a document CN101478610A, where the method includes: receiving a request flag sent by a calling terminal or a called terminal; and triggering continuous play of a multimedia ring tone during a call according to the request flag.

During the implementation of the present invention, the inventor finds that, for a CRS service, in the prior art, when a calling party calls a called party, the called party receives a CRS delivered by a CRS server; after the called party answers the call, the CRS server stops playing the CRS, and enters a normal call stage. For a CAT service, in the prior art, when a calling party calls a called party, the calling party receives a CAT delivered by a CAT server; after the called party answers the call, the CAT server stops playing the CAT, and enters a normal call stage. Therefore, in the prior art, the multimedia ring tone cannot be played continuously during the call.

### SUMMARY OF THE INVENTION

Embodiments of the present invention provide a method, a server and a terminal device for playing a multimedia ring tone during a call, so as to solve a problem in the prior art that a multimedia ring tone cannot be continuously played for a user during a call.

The above objectives of the embodiments of the present invention are implemented through the following technical solutions.

An embodiment of the present invention provides a method for playing a multimedia ring tone during a call, where the method includes:
receiving an off-hook message of a called terminal;
sending a message to a calling terminal and the called terminal to update a session; and
instructing a Multimedia Resource Function, MRF, to execute audio mixing processing to continuously play a multimedia ring tone during the call;
wherein the method further comprising: requesting, by a Customized Ringing Signal-Application Server, CRS-AS, from the MRF a site resource or a resource for audio mixing during a call;
wherein the step of sending comprises:
   sending, by the CRS-AS, a re-INVITE message to the called terminal, where the message carries an Session Description Protocol, SDP, Offer generated by the MRF, and both an IP address and a port number in the SDP Offer are pointed to the MRF; and
   sending, by the CRS-AS, an UPDATE message to the calling terminal, where the message carries an SDP Offer generated by the MRF, and both an IP address and a port number in the SDP Offer are pointed to the MRF.

An embodiment of the present invention further provides a multimedia ring tone server, including:
a module, configured to receive an off-hook message of a called terminal;
a module, configured to send a message to a calling terminal and the called terminal to update a session;
a module, configured to instruct a Multimedia Resource Function, MRF, to execute audio mixing processing to continuously play a multimedia ring tone during a call; and
a module configured to request from the MRF a site resource or a resource for audio mixing during a call;
wherein the module configured to send the message to the calling terminal and the called terminal to update the session comprises at least one of the following modules:
   a module, configured to send a re-INVITE message to the called terminal, where the message carries an Session Description Protocol, SDP, Offer generated by the MRF, and both an IP address and a port number in the SDP Offer are pointed to the MRF; and
   a module, configured to send an UPDATE message to the calling terminal, where the message carries an SDP Offer generated by the MRF, and both an IP address and a port number in the SDP Offer are pointed to the MRF.

The method, server and terminal device for playing a multimedia ring tone during a call according to the embodiments of the present invention solve the problem in the prior art that a multimedia ring tone cannot be continuously played for a user during a call.

### BRIEF DESCRIPTION OF THE DRAWINGS

The accompanying drawings described herein are provided for further understanding of the present invention, which constitute a part of the application, but are not intended to limit the present invention. In the accompanying drawings:
FIG. 1 is a flow chart of a method according to an embodiment of the present invention;
FIG. 2 is a schematic structure diagram of networking according to an embodiment of the present invention;
FIGs. 3A and 3B are an interaction flow chart of an embodiment shown in FIG. 2;
FIGs. 4A and 4B are another interaction flow chart of an embodiment shown in FIG. 2;
FIGs. 5A and 5B are another interaction flow chart of an embodiment shown in FIG. 2;
FIGs. 6A and 6B are another interaction flow chart of an embodiment shown in FIG. 2;
FIG. 7 is a schematic structure diagram of networking according to another embodiment of the present invention;
FIG. 8 is an interaction flow chart of an embodiment shown in FIG. 7;
FIG. 9 is a block diagram of components of a ring tone server according to an embodiment of the present invention;
FIG. 10 is a flow chart of a method according to another embodiment of the present invention;
FIG. 11 is a block diagram of components of a terminal device according to an embodiment of the present invention;
FIGs. 12A and 12B are an interaction flow chart of Embodiment 1 of the present invention; and
FIG. 13 is a schematic diagram of a method according to Embodiment 2 of the present invention.

### DETAILED DESCRIPTION OF THE EMBODIMENTS

In order to make the objectives, technical solutions and advantages of the present invention clearer, the present invention is hereinafter described in detail with reference to the accompanying drawings and embodiments. The exemplary embodiments and descriptions of the embodiments of the present invention are used to illustrate the present invention, but the present invention is not limited thereto.

### Example 1

The embodiment of the present invention provides a method for playing a multimedia ring tone during a call, and the embodiment is described in detail below with reference to the accompanying drawings.

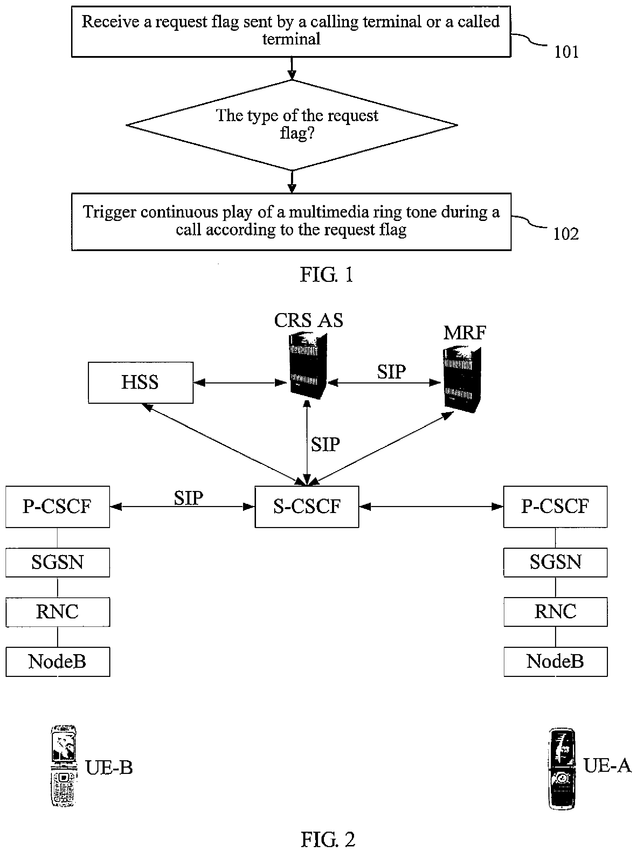

FIG. 1 is a flow chart of a method according to an embodiment of the present invention. Referring to FIG. 1, the method according to the embodiment of the present invention mainly includes:
Step 101: Receive a request flag sent by a calling terminal or a called terminal.
Step 102: Trigger continuous play of a multimedia ring tone during a call according to the request flag.

The method for playing a multimedia ring tone during a call according to the embodiment of the present invention may implement continuous play of the multimedia ring tone for the calling terminal or the called terminal during the call.

### Example 2

The embodiment of the present invention further provides a method for playing a multimedia ring tone during a call, and the embodiment is described in detail below with reference to the accompanying drawings.

FIG. 1 is a flow chart of a method according to an embodiment of the present invention. Referring to FIG. 1, the method of the present invention mainly includes:
Step 101: Receive a request flag sent by a calling terminal or a called terminal.

In the embodiment, the request flag sent by the called terminal may be carried by an off-hook reply message (200 OK message) in an Internet Protocol (IP) Multimedia Subsystem (IMS) domain, or carried by a header field or message body of an INFO message or a MESSAGE message after the off-hook reply message; or carried by a UUI message or a FACILITY message in a Circuit Switching (CS) domain, or carried in a Dual-Tone Multifrequency (DTMF) manner. Alternatively, the request flag may be obtained in an out-of-band manner or an offline manner from the called terminal, and the embodiment of the present invention is not limited thereto.

In the embodiment, the request flag may be a CRS mixing flag to request a server to perform a mixing operation on a CRS and a call media stream from the calling terminal to the called terminal. In the case, only the called terminal can hear the CRS during the call.

In the embodiment, the request flag may be a CAT mixing flag to request the server to perform a mixing operation on a CAT and a call media stream from the called terminal to the calling terminal. In the case, only the calling terminal can hear the CAT during the call.

In the embodiment, the request flag may also be a CBT mixing flag to request the server to perform a mixing operation on a CRS/CAT and a call media stream between the calling terminal and the called terminal. In the case, both the calling terminal and the called terminal can hear the CRS/CAT during the call. At this time, the CRS/CAT is served as a CBT.

In the embodiment, the request flag may also be a multimedia ring tone link downloading flag to request the server to deliver a multimedia ring tone link, so that the calling terminal or the called terminal downloads the multimedia ring tone and plays the multimedia ring tone locally during the call.

In the embodiment, the request flag may also be a terminal Mix capability flag to request a server side not to stop playing the multimedia ring tone, so that the calling party or the called party performs a mixing on the multimedia ring tone and a call media stream, and plays the mixed multimedia ring tone locally. In the case, the calling terminal or the called terminal needs to have a mixing capability.

Step 102: Trigger continuous play of the multimedia ring tone during the call according to the request flag.

In the embodiment, if the received request flag is the CRS mixing flag, the step of triggering continuous play of the multimedia ring tone during the call according to the request flag is described as follows.

An indication message carrying the CRS mixing flag is sent to an MRF entity to instruct the MRF entity to perform audio mixing/mixing on the CRS and the call media stream from the calling terminal to the called terminal.

In the embodiment, if the received request flag is the CAT mixing flag, the step of triggering continuous play of the multimedia ring tone during the call according to the request flag is described as follows.

An indication message carrying the CAT mixing flag is sent to the MRF entity to instruct the MRF entity to perform audio mixing/mixing on the CAT and the call media stream from the called terminal to the calling terminal.

In the embodiment, if the received request flag is the CBT mixing flag, the step of triggering continuous play of the multimedia ring tone during the call according to the request flag is described as follows.

An indication message carrying the CBT mixing flag is sent to the MRF entity to instruct the MRF entity to perform audio mixing/mixing on the CRS/CAT and the call media stream between the calling terminal and the called terminal.

According to the embodiment, if the indication message instructs to perform audio mixing/mixing on the CRS/CAT and the call media stream between the calling party and the called party, it means that the CRS or CAT is to be converted to the CBT. Therefore, the method of the embodiment further needs to include the steps of negotiating the CBT with the calling terminal and the called terminal.

A CBT request is sent to the calling terminal and the called terminal to negotiate a CBT session.

Reply messages of the calling terminal and the called terminal in response to the CBT request are received.

In the embodiment, the CBT request may be transferred through a re-INVITE message, or may be transferred through a REFER message, and the embodiment is not limited thereto.

According to the method of the embodiment, during a call between the calling terminal and the called terminal, the calling terminal, or the called terminal, or both the calling terminal and the called terminal can continuously hear the multimedia ring tone. The multimedia ring tone is played by the server side after the server side performs mixing on the CRS/CAT and the call media stream; therefore, after the calling terminal or the called terminal is on-hook, the method of the embodiment further includes the following steps.

After an on-hook message is received, a stop message is sent to the MRF entity to instruct the MRF entity to stop an audio mixing/mixing operation and to stop playing the multimedia ring tone.

A stop acknowledgment message returned by the MRF entity is received to confirm that the audio mixing/mixing operation is stopped and play of the multimedia ring tone is stopped.

In the embodiment, in the IMS domain, the on-hook message may be a BYE message; in the CS domain, the on-hook message may be a disconnect message.

In the embodiment, if the received request flag is the multimedia ring tone link downloading flag, the step of triggering continuous play of the multimedia ring tone during the call according to the request flag is described as follows.

An indication message carrying the multimedia ring tone link downloading flag is sent to the MRF entity to instruct the MRF entity to send the multimedia ring tone link.

A reply message that includes the multimedia ring tone link and is in response to the indication message is received, where the reply message is returned by the MRF entity.

According to the embodiment, after an acknowledgment message of the calling terminal in response to the off-hook reply message is received, the acknowledgment message carrying the multimedia ring tone link may be sent to a request terminal; after the request terminal obtains the multimedia ring tone downloading link and downloads the multimedia ring tone, the multimedia ring tone may be played locally.

In the embodiment, if the received request flag is the terminal Mix capability flag, the step of triggering continuous play of the multimedia ring tone during the call according to the request flag is described as follows.

After the off-hook reply message is received, the multimedia ring tone is continuously played.

According to the method of the embodiment, since the server side does not stop sending the multimedia ring tone, the request terminal may perform audio mixing/mixing on the multimedia ring tone and the call media stream and play the mixed multimedia ring tone locally. Therefore, after the calling terminal and the called terminal are on-hook, the method of the embodiment further includes the following steps.

After the on-hook message is received, a stop message is sent to the MRF entity to instruct the MRF entity to stop playing the multimedia ring tone.

A stop acknowledgment message returned by the MRF entity is received to confirm that play of the multimedia ring tone is stopped.

In the embodiment, if a multimedia ring tone file played for a user is a file such as a picture, a text or an electronic business card, after a multimedia ring tone server receives a corresponding request flag and receives a 200 OK message, the multimedia ring tone server does not perform the audio mixing/mixing operation; instead, the multimedia ring tone server only continues to play the multimedia ring tone file.

Through the method of the embodiment, the calling terminal, or the called terminal, or both the calling terminal and the called terminal during the call may continue to hear the multimedia ring tone, thereby solving a problem in the prior art that the multimedia ring tone cannot be continuously played for a user during the call, as well as a problem of converting the CRS or CAT to the CBT during the call.

The method of the embodiment is not only applicable to a call process in a circuit switching domain (CS domain), but also applicable to a call process in an IMS domain (IP multimedia subsystem), and implements continuous play of the CRS (or CAT) during the call in an early-session manner, a multi-session manner, a gateway manner in the IMS domain, and in a bridging manner and non-bridging manner in the CS domain. The following different embodiments are taken for illustration.

### Example 3

A method in the embodiment is applicable to an early-session manner in an IMS domain. A server side performs mixing on a CRS and a call media stream to implement a unidirectional "CRS + call" to a called party.

In the embodiment, when a user of a called terminal is off-hook, a mixing request flag for a server is carried in a 200 OK message sent by the called party. In the embodiment, the flag is a CRS mixing flag. After a CRS-AS receives the flag, the CRS-AS triggers a corresponding action, that is, the CRS-AS instructs an MRF entity MRF to perform a mixing operation on a CRS and a call media stream and sends the mixed media stream to the called terminal.

In the embodiment, a requesting terminal is a called party, and it is assumed that a user of a calling terminal A customizes a CRS service for a user of a called terminal B. When A calls B, the CRS-AS instructs the MRF to play a CRS for B. When B answers the call, a 200 OK message sent by a User Equipment (UE) B carries a mixing request flag for a server, where the flag may be preset by the user of the calling terminal on the calling terminal. After parsing the flag, the CRS-AS instructs the MRF to perform mixing processing on the CRS and a call from A to B. The user of the terminal B may continuously enjoy a CRS multimedia content during the call with the user of the terminal A. Both the CRS and call media stream may be in a format of audio or video. If the CRS is an audio, audio mixing may be performed directly on the CRS and a call stream; if the CRS is a video, video mixing may be performed on a CRS video and a call video stream and then the CRS video and the call video stream may be displayed in separated screens.

FIG. 2 is a structure diagram of networking of the embodiment, as shown in FIG. 2.

UE (User Equipment) is a User Equipment. In the embodiment, UE-A is a calling terminal, and UE-B is a called terminal.

Node B is a base station of a Wideband Code Division Multiple Access (WCDMA) system, that is, a radio transceiver, which mainly accomplishes processing of a Uu interface physical layer protocol.

RNC (Radio Network Controller) is a Radio Network Controller, and is configured to control a radio resource of a Universal Terrestrial Radio Access Network (UTRAN).

SGSN (Serving GPRS Support Node) is a Serving General Packet Radio Service (GPRS) Support Node, and is a functional node in a Packet Switching (PS) domain of a WCDMA core network, and mainly provides functions such as routing forward, Mobility Management, session management, authentication and encryption of the PS domain.

P-CSCF (Proxy Call Session Control Function) is Proxy Call Session Control Function. The P-CSCF is a first contact point of a user in an IMS network, and is mainly responsible for request authentication, and response processing and forwarding.

S-CSCF (Serving Call Session Control Function) is Serving Call Session Control Function. The S-CSCF is in the core control status in the IMS network, and plays a key role in IMS multi-process control. The S-CSCF is responsible for recording and controlling the state of a process of the user, executing a session routing function, and continuously interacting with an application service function and a charging function to perform value-added service triggering and service control according to a rule.

HSS (Home Subscriber Server) is a Home Subscriber Server. The HSS is a database storing data related to a user and a service, and is an upgraded Home Location Register (HLR). The HSS records a user identity, registration information, an access parameter and service triggering information in a format of Extensive Makeup Language (XML).

CRS-AS (Customized Ringing Signal Application Server) is a Customized Ringing Signal Application Server. The CRS-AS is a server providing an IP Multimedia (IM) value-added service for the user in the IMS network. The CRS-AS may be located in a home network of the user, or may be provided by a third party. The CRS-AS is mainly configured to provide a CRS service and control an MRF to play a media resource.

MRF (Multimedia Resource Function) is a Multimedia Resource Function entity. The MRF includes a controlling part (MRFC) and a processing part of a user plane (MRFP), provides support for bearer related services such as multimedia resource play, a video conference and user advertisement, and can accomplish mixing of data media streams, delivery of media streams, conversion of bearer codes, and sending of charging information.

A combination of the CRS-AS and the MRF may be referred to as a CRS server. Similarly, a combination of a CAT-AS and the MRF may be referred to as a CAT server, and a combination of a CBT-AS and the MRF may be referred to as a CBT server. A combination of the CRS-AS, CAT-AS, CBT-AS and MRF may be referred to as a multimedia ring tone server.

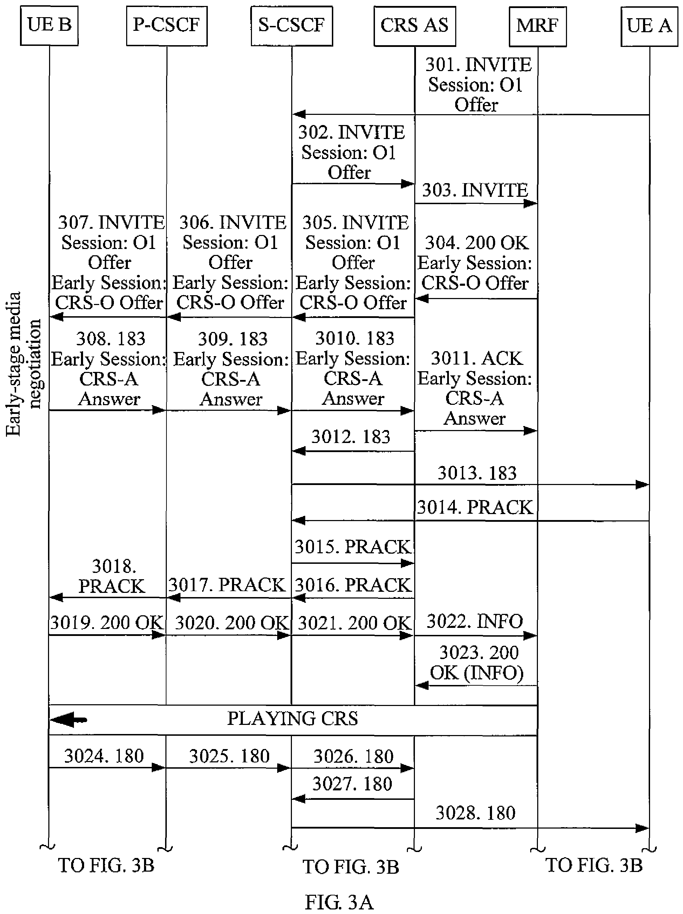

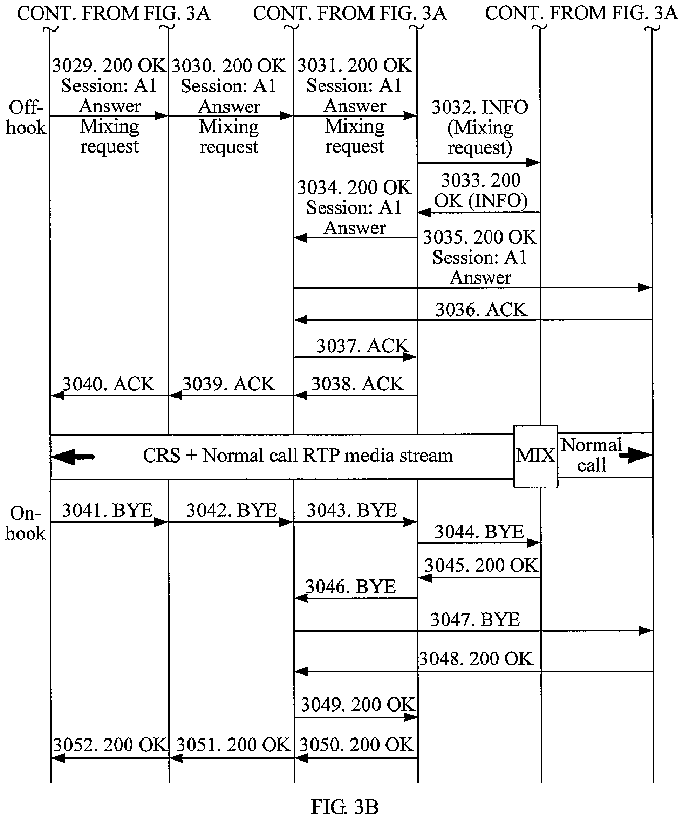

FIGs. 3A and 3B are a schematic diagram of a call process of the embodiment. As shown in FIGs. 3A and 3B.

Step 301 to step 302: A calling terminal UE-A sends an INVITE request carrying a normal session (Session) Session Description Protocol (SDP) Offer (O1), so as to establish a call with a called terminal UE-B. The INVITE request first arrives at an S-CSCF, and is routed to a CRS-AS according to an initial Filter Criteria (iFC) in the S-CSCF.

Step 303 to step 304: The CRS-AS confirms that the UE-A has already subscribed a CRS service for the UE-B, and sends an INVITE request without an SDP to an MRF. The MRF returns a 200 OK message as a reply. The 200 OK message carries an early-session SDP Offer (CRS-O). The aim is to establish a CRS media stream between the UE-B and the MRF.

Step 305 to step 307: The CRS-AS generates an INVITE request, and the INVITE request arrives at the UE-B via the S-CSCF and a P-CSCF. The INVITE request includes two SDPs: a normal session SDP Offer (O1) and an early-session SDP Offer (CRS-O). Moreover, a Require header field of the INVITE includes an early-session option label.

Step 308 to step 3010: The called terminal UE-B replies the early-session SDP Offer (CRS-O) in the INVITE request, and returns a reliable 183 temporary response. The 183 carries an early-session SDP Answer (CRS-A), and a Require header field of the 183 includes a 100rel option label.

Step 3011: After the CRS-AS receives the 183, the CRS-AS sends an acknowledgment message ACK to the MRF, and the ACK carries the early-session SDP Answer (CRS-A).

Step 3012 to step 3013: The CRS-AS sends the 183 to the S-CSCF, and the S-CSCF forwards the 183 to the calling terminal UE-A.

Step 3014 to step 3018: The UE-A returns a reliable response PRACK in response to the 183, and the PRACK arrives at the UE-B via the S-CSCF, CRS-AS, S-CSCF and P-CSCF.

Step 3019 to step 3021: The UE-B returns an acknowledgment message 200 OK in response to the PRACK, and the 200 OK arrives at the CRS-AS via the P-CSCF and S-CSCF.

Step 3022 to step 3023: The CRS-AS sends an INFO message to the MRF to instruct the MRF to start playing a CRS for the UE-B. The MRF returns a 200 OK message as an acknowledgment and starts playing the CRS. At this time, a called party B hears/watches from the UE-B the CRS customized by a calling party A.

Step3024 to step 3028: The UE-B returns a 180 CRS message, and the 180 CRS message arrives at the UE-A via the P-CSCF, S-CSCF, CRS-AS and S-CSCF.

Step 3029 to step 3031: The called party B answers the call, and the UE-B sends a 200 OK message carrying a normal session SDP Answer (A1). According to the method of the embodiment, the 200 OK message also carries an audio mixing/mixing request (mixing request) flag at the same time, that is, a CRS mixing flag, where the flag may be carried through a Session Initiation Protocol (SIP) header field, a SDP, or an XML file. For an XML carrying manner, content-type in the SIP header field may be set to a multipart/mixed type, and then the XML file may be carried after an SDP message body. The 200 OK message arrives at the CRS-AS via the P-CSCF and S-CSCF.

Step 3032 to step 3033: According to the method of the embodiment, after the CRS-AS receives the 200 OK message carrying the mixing request flag, the CRS-AS sends an INFO message to the MRF, and the INFO carries the mixing request flag through the SDP or a field of a header field, so as to instruct the MRF to initiate a MIX unit to prepare to perform audio mixing/mixing on the CRS and the call media stream. The MRF returns a reply message 200 OK in response to the INFO.

Step 3034 to step 3035: The CRS-AS forwards the 200 OK message carrying the normal session SDP Answer (A1), and the 200 OK message arrives at the UE-A via the S-CSCF.

Step 3036 to step 3040: The UE-A returns an acknowledgment message ACK in response to the 200 OK message, and the acknowledgment message ACK arrives at the UE-B via the S-CSCF, CRS-AS, S-CSCF and P-CSCF. At this time, a normal call is established between the UE-A and the UE-B. According to the method of the embodiment, the MRF serves as a Mixer (audio/video Mixer) and is anchored on a call path between the calling party and the called party. A MIX operation is performed on the audio/video of a calling user and the CRS, and the audio/video of the calling user and the CRS are combined into one path of media stream and are sent to the called terminal UE-B. The MRF does not perform the MIX operation on an audio/video media stream from the UE-B to the UE-A.

Step 3041 to step 3052: The called party B is on-hook; the UE-B sends a BYE message to the UE-A via the P-CSCF, S-CSCF, CRS-AS and S-CSCF. According to the method of the embodiment, after the CRS-AS receives the BYE message, the CRS-AS sends a BYE message to the MRF to instruct the MRF to stop the MIX operation and to stop playing the CRS. The UE-A returns a 200 OK message to the UE-B. The call ends.

In step 3029 to step 3031 of the embodiment, apart from being carried by the 200 OK, the mixing request flag for the server (the CRS mixing flag) may also be carried by a message such as INFO or MESSAGE after the 200 OK message. The embodiment is not limited thereto. In addition, apart from carrying the mixing request flag through the 200 OK message when being off-hook, the called party may also implement the mixing request in an out-of-band manner (such as a short message) or in an offline manner (such as Web).

In the embodiment, as the mixing (MIX) operation is performed by the server side, a network entity in the prior art can support the function. In addition, the embodiment does not have demands on a terminal side, and an ordinary terminal can implement normal receiving of the CRS during the call.

### Example 4

A method in the embodiment is applicable to an early-session method in an IMS domain. A server side performs mixing on a CRS and a call media stream to implement a bi-directional "CRS + call" to a calling party and a called party.

In the embodiment, when a user of a called party is off-hook, a 200 OK message sent by the called terminal carries a mixing request flag for a server. In the embodiment, the flag is a CBT mixing flag. A CRS-AS triggers a corresponding action after receiving the flag, that is, the CRS-AS instructs an MRF to perform a mixing operation on a CBT. The CRS-AS sends a re-INVITE request to a calling terminal and the called terminal, where the request carries a CBT session SDP Offer. After the calling terminal and the called terminal replies each other, the MRF enters a CBT play mode, that is, playing the CBT during the call between the calling terminal and the called terminal.

In the embodiment, a request terminal is the called terminal. It is assumed that when a user of a called terminal B is off-hook, the CRS-AS instructs the MRF to perform an operation of converting a CRS mode to a CBT mode. In this way, during the call between a user of the calling terminal and a user of the called terminal, both parties can enjoy the CBT (a multimedia content such as audio or video) played by the MRF.

A networking structure and functions thereof of the embodiment are the same as Example 3, which are not described in detail herein again.

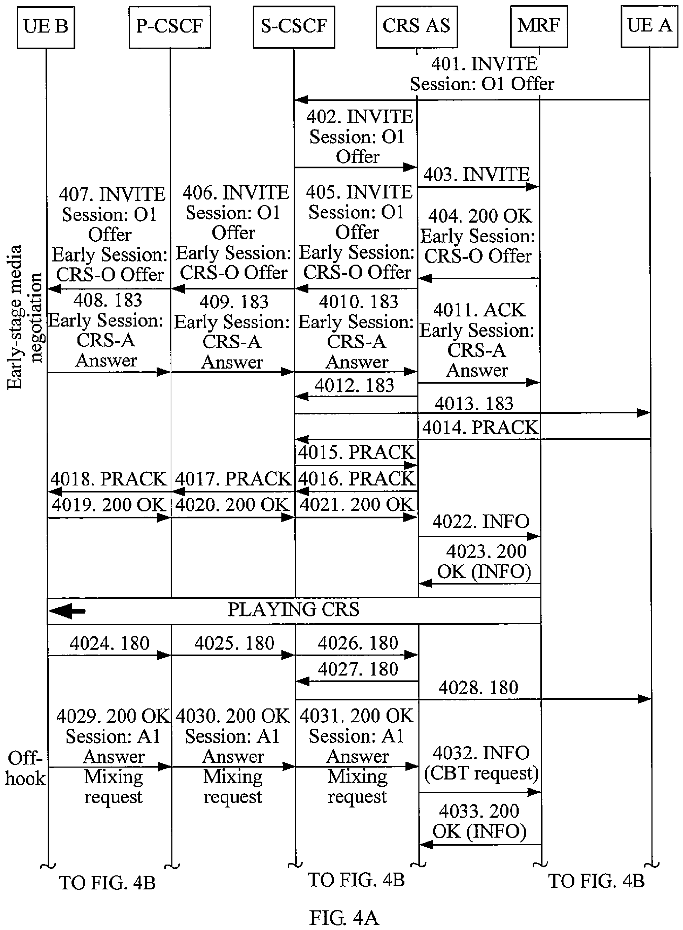

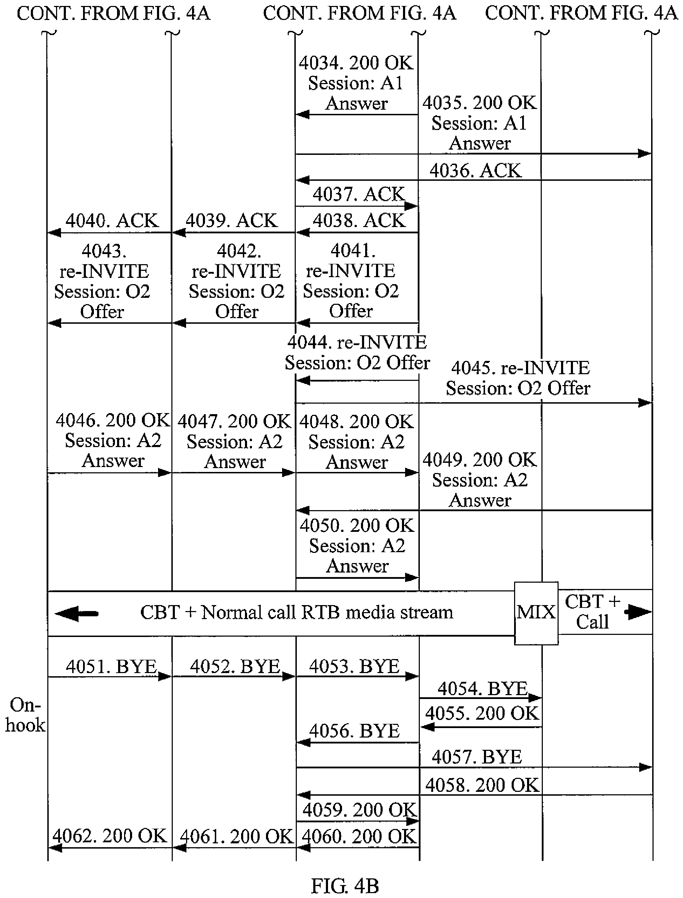

FIGs. 4A and 4B are a schematic diagram of a call process of the embodiment. As shown in FIGs. 4A and 4B.

Step 401 to step 402: A calling terminal UE-A sends an INVITE request carrying a normal session SDP Offer (O1), so as to establish a call with a called terminal UE-B. The INVITE request first arrives at an S-CSCF, and is routed to a CRS-AS according to an initial Filter Criteria iFC in the S-CSCF.

Step 403 to step 404: The CRS-AS confirms that the UE-A has already subscribed a CRS service for the UE-B, and sends an INVITE request without an SDP to an MRF. The MRF returns a 200 OK message as a reply. The 200 OK message carries an early-session (Early-session) SDP Offer (CRS-O). The aim is to establish a CRS media stream between the UE-B and the MRF.

Step 405 to step 407: The CRS-AS generates an INVITE request, and the INVITE request arrives at the UE-B via the S-CSCF and a P-CSCF. The INVITE request includes two SDPs: a normal session SDP Offer (O1) and an early-session SDP Offer (CRS-O). Moreover, a Require header field of the INVITE includes an early-session option label.

Step 408 to step 4010: The called terminal UE-B replies the early-session SDP Offer (CRS-O) in the INVITE request, and returns a reliable 183 temporary response. The 183 carries an early-session SDP Answer (CRS-A), and a Require header field of the 183 includes a 100rel option label.

Step 4011: After receiving the 183, the CRS-AS sends an acknowledgment message ACK to the MRF, and the ACK carries the early-session SDP Answer (CRS-A).

Step 4012 to step 4013: The CRS-AS sends the 183 to the S-CSCF, and the S-CSCF forwards the 183 to the calling terminal UE-A.

Step 4014 to step 4018: The UE-A returns a reliable response PRACK in response to the 183, and the PRACK arrives at the UE-B via the S-CSCF, CRS-AS, S-CSCF and P-CSCF.

Step 4019 to step 4021: The UE-B returns an acknowledgment message 200 OK in response to the PRACK, and the 200 OK arrives at the CRS-AS via the P-CSCF and S-CSCF.

Step 4022 to step 4023: The CRS-AS sends an INFO message to the MRF to instruct the MRF to start playing a CRS for the UE-B. The MRF returns a 200 OK message as an acknowledgment and starts playing the CRS. At this time, a called party B hears/watches from the UE-B the CRS customized by a calling party A.

Step4024 to step 4028: The UE-B returns a 180 CRS message, and the 180 CRS message arrives at the UE-A via the P-CSCF, S-CSCF, CRS-AS and S-CSCF.

Step 4029 to step 4031: The called party B answers the call, and the UE-B sends a 200 OK message carrying a normal session SDP Answer (A1). According to the method of the embodiment, the 200 OK message also carries an audio mixing/mixing request (mixing request) flag at the same time, that is, a CBT mixing flag, where the flag may be carried through a second SDP, a field of a header field or an XML file, and arrives at the CRS-AS via the P-CSCF and S-CSCF.

Step 4032 to step 4033: According to the method of the embodiment, after the CRS-AS receives the 200 OK carrying the Mixing request flag, the CRS-AS sends an INFO message to the MRF, and the INFO carries the Mixing request flag through the SDP or the field of the header field, so as to instruct the MRF to initiate a MIX unit to prepare to perform audio mixing/mixing on the CRS and a call media stream. The MRF returns a reply message 200 OK in response to the INFO message.

Step 4034 to step 4035: The CRS-AS forwards the 200 OK message carrying the normal session SDP Answer (A1), and the 200 OK message arrives at the UE-A via the S-CSCF.

Step 4036 to step 4040: The UE-A returns an acknowledgment message ACK in response to the 200 OK message, and the ACK arrives at the UE-B via the S-CSCF, CRS-AS, S-CSCF and P-CSCF.

Step 4041 to step 4043: According to the method of the embodiment, the CRS-AS sends a re-INVITE request to the UE-B, so as to re-negotiate a CBT session, where the re-INVITE message carries a CBT session SDP Offer (02).

Step 4044 to step 4045: According to the method of the embodiment, the CRS-AS sends a re-INVITE request to the UE-A, so as to re-negotiate a CBT session, where the re-INVITE message carries the CBT session SDP Offer (02).

Step 4046 to step 4048: According to the method of the embodiment, the UE-B returns a 200 OK in response to the re-INVITE to the CRS-AS, where the 200 OK message carries a CBT session SDP Answer (A2).

Step 4049 to step 4050: According to the method of the embodiment, the UE-A returns a reply 200 OK in response to the re-INVITE request to the CRS-AS, where the 200 OK message carries the CBT session SDP Answer (A2).

At this time, a normal call is established between the UE-A and the UE-B. The MRF serves as a Mixer (audio/video Mixer) and is anchored on a call path between the calling party and the called party. A MIX operation is performed on audios/videos of the calling/called party and the CRS, and the mixed audios/videos and CRS are sent to the calling party and the called party, respectively. At this time, the CRS may be referred to as a CBT.

Step 4051 to step 4062: The called party B is on-hook; the UE-B sends a BYE message to the UE-A via the P-CSCF, S-CSCF, CRS-AS and S-CSCF. According to the method of the present invention, after the CRS-AS receives the BYE message, the CRS-AS sends a BYE message to the MRF to instruct the MRF to stop the mixing operation and to stop playing the CBT. The UE-A returns a 200 OK message to the UE-B. The call ends.

In step 4041 to step 4054 of the embodiment, a method of re-INVITE may also be replaced by a method of REFER. That is, the CRS-AS sends a REFER request to the calling terminal and the called terminal to invite the calling terminal and the called terminal to join in the CBT mode, where a Refer-to field carries a Uniform Resource Identifier (URI) in the CBT mode. The calling terminal and the called terminal return an Accepted response and send a NOTIFY message, so as to notify the MRF that the terminals have received the request. The MRF returns a 200 OK message. In the way, the calling terminal and the called terminal enter the CBT mode.

In the embodiment, a mixing is performed by the server side; therefore, the embodiment does not have demands on a terminal side. In addition, during the call, the CRS mode is converted to the CBT mode, so that both the calling party and the called party can enjoy a multimedia background content.

### Example 5

A method in the embodiment is applicable to an early-session manner in an IMS domain. A terminal performs audio mixing/mixing on a CRS and a call media stream to implement a unidirectional "CRS + call" to a called party.

In the embodiment, after a user of a called terminal is off-hook, the called terminal carries a terminal Mix capability flag in a 200 OK message. After a CRS-AS receives the flag, the CRS-AS does not send a BYE message to an MRF. The MRF continues to play a CRS during a call between a calling terminal and the called terminal. The called terminal receives two paths of media streams at the same time, and uses a local mixing unit of the called terminal to perform a mixing operation.

In the embodiment, a request terminal is the called terminal. It is assumed that the called terminal B has a function of performing audio mixing/mixing on two paths of media streams, and still can receive the CRS media stream during the call and display (or play) the two paths of media streams to the user of the called terminal after the audio mixing/mixing is performed on the two paths of media streams.

A networking structure and functions thereof of the embodiment are the same as Example 3, which are not described in detail herein again.

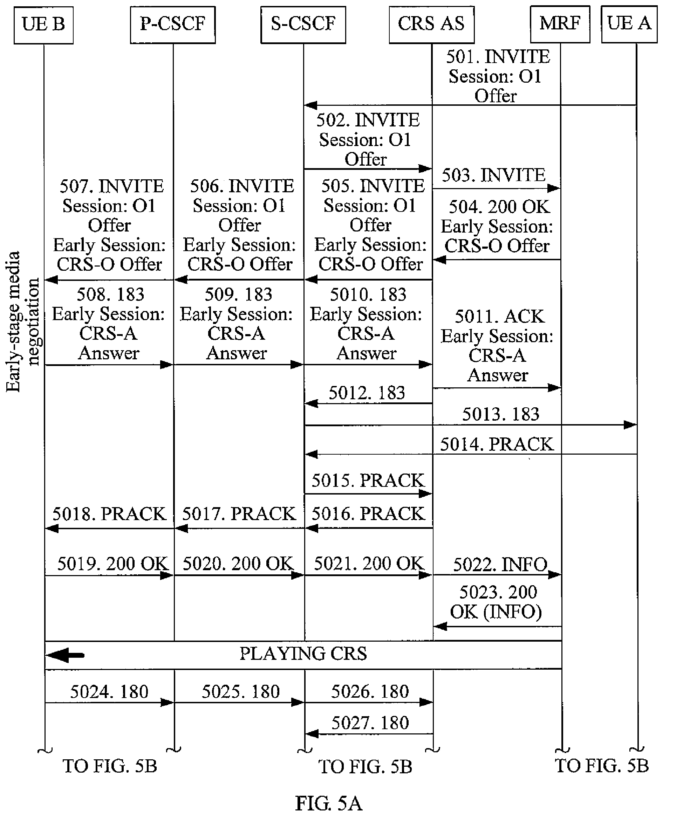

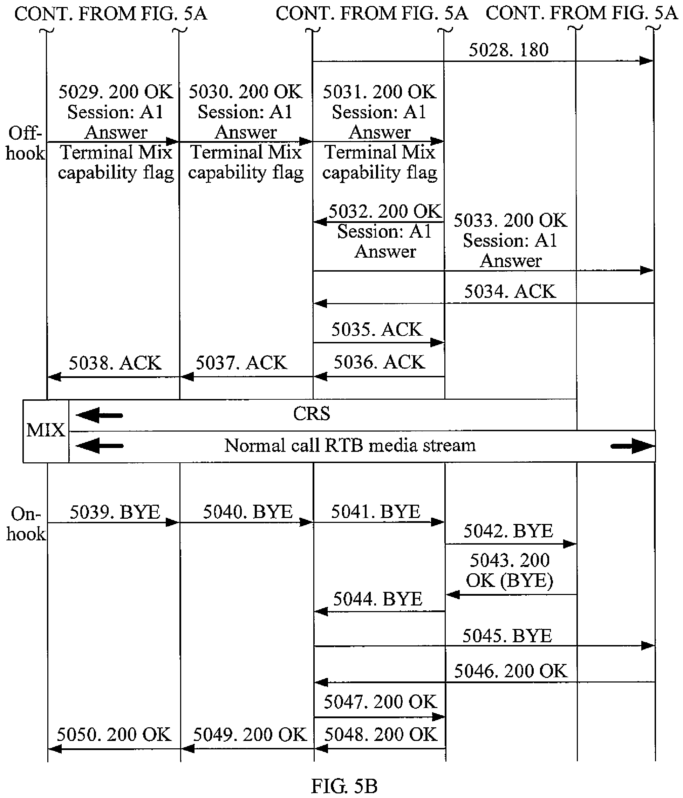

FIGs. 5A and 5B are a schematic diagram of a call process of the embodiment. As shown in FIGs. 5A and 5B,
Step 501 to step 502: A calling terminal UE-A sends an INVITE request carrying a session (Session) SDP Offer (O1), so as to establish a call with a called terminal UE-B. The INVITE request first arrives at an S-CSCF, and is routed to a CRS-AS according to an iFC in the S-CSCF.

Step 503 to step 504: The CRS-AS confirms that the UE-A has already subscribed a CRS service for the UE-B, and the CRS-AS sends an INVITE request without an SDP to an MRF. The MRF returns a 200 OK message as a reply. The 200 OK message carries an early-session SDP Offer (CRS-O). The aim is to establish a CRS media stream between the UE-B and the MRF.

Step 505 to step 507: The CRS-AS generates an INVITE request, and the INVITE request arrives at the UE-B via the S-CSCF and a P-CSCF. The INVITE request includes two SDPs: a normal session SDP Offer (O1) and an early-session SDP Offer (CRS-O). Moreover, a Require header field of the INVITE includes an early-session option label.

Step 508 to step 5010: The called terminal UE-B replies the early-session SDP Offer (CRS-O) in the INVITE request, and returns a reliable 183 temporary response. The 183 carries an early-session SDP Answer (CRS-A), and a Require header field of the 183 includes a 100rel option label.

Step 5011: After the CRS-AS receives the 183, the CRS-AS sends an acknowledgment message ACK to the MRF, and the ACK carries the early-session SDP Answer (CRS-A).

Step 5012 to step 5013: The CRS-AS sends the 183 to the S-CSCF, and the S-CSCF forwards the 183 to the calling terminal UE-A.

Step 5014 to step 5018: The UE-A returns a reliable response PRACK in response to the 183, and the PRACK arrives at the UE-B via the S-CSCF, CRS-AS, S-CSCF and P-CSCF.

Step 5019 to step 5021: The UE-B returns an acknowledgment message 200 OK in response to the PRACK, and the 200 OK arrives at the CRS-AS via the P-CSCF and S-CSCF.

Step 5022 to step 5023: The CRS-AS sends an INFO message to the MRF to instruct the MRF to start playing a CRS for the UE-B. The MRF returns a 200 OK message as an acknowledgment and starts playing the CRS. At this time, a called party B hears/watches from the UE-B the CRS customized by a calling party A.

Step5024 to step 5028: The UE-B returns a 180 CRS message, and the 180 CRS message arrives at the UE-A via the P-CSCF, S-CSCF, CRS-AS and S-CSCF.

Step 5029 to step 5031: The called party B answers the call, and the UE-B sends a 200 OK message carrying a normal session SDP Answer (A1). According to the method of the embodiment, the 200 OK message also carries a terminal Mix capability flag at the same time, so as to indicate that a terminal has an audio mixing/mixing capability, where the flag may be carried by a second SDP, a field of a header field or an XML file, and arrives at the CRS-AS via the P-CSCF and S-CSCF.

Step 5032 to step 5033: The CRS-AS forwards the 200 OK message carrying the normal session SDP Answer (A1), and the 200 OK message arrives at the UE-A via the S-CSCF.

Step 5034 to step 5038: The UE-Areturns an acknowledgment message ACK in response to the 200 OK message, and the acknowledgment message ACK arrives at the UE-B via the S-CSCF, CRS-AS, S-CSCF and P-CSCF.

At this time, a normal call between the UE-A and the UE-B is established, and the audio/video call between the calling party and the called party is transmitted through Real Time Protocol (RTP) stream media. At the same time, the MRF continues to play the CRS for the UE-B. The UE-B performs a mixing operation on the received two paths of media streams, combines the two paths of media streams into one path of media stream and plays the combined media stream.

Step 5039 to step 5050: The called party B is on-hook; the UE-B sends a BYE message to the UE-A via the P-CSCF, S-CSCF, CRS-AS and S-CSCF. According to the method of the embodiment, after the CRS-AS receives the BYE message, the CRS-AS sends a BYE message to the MRF to instruct the MRF to stop playing the CRS. The MRF returns a 200 OK message in response to the BYE message. The UE-A returns a 200 OK message to the UE-B. The call ends.

In the embodiment, the mixing is performed by the called terminal; therefore, the embodiment does not have demands on a server, processing procedures of the server may be reduced and loads of the server may be decreased. However, demands on the terminal are high, and a special mixing module should be added in a conventional terminal.

### Example 6

A method of the embodiment is applicable to an early-session manner in an IMS domain. A terminal downloads a CRS in an out-of-band manner to implement local play for a called party during a call.

In the embodiment, when a user of a called terminal is off-hook, the called terminal carries a CRS downloading flag in a 200 OK message and requests a server to deliver a CRS URI link, so as to perform downloading and local play. After a CRS-AS receives the flag, the CRS-AS instructs an MRF to deliver the CRS URI to the called terminal, and stop playing a current CRS. After the called terminal receives the CRS URI, the called terminal downloads a CRS from a third-party Web server through a Hypertext Transfer Protocol (HTTP), and plays the CRS locally during the call.

In the embodiment, a request terminal is the called terminal. It is assumed that a user of the called terminal B expects to download the CRS and play the CRS locally during the call.

A networking structure and functions thereof of the embodiment are the same as Example 3, which are not described in detail herein again.

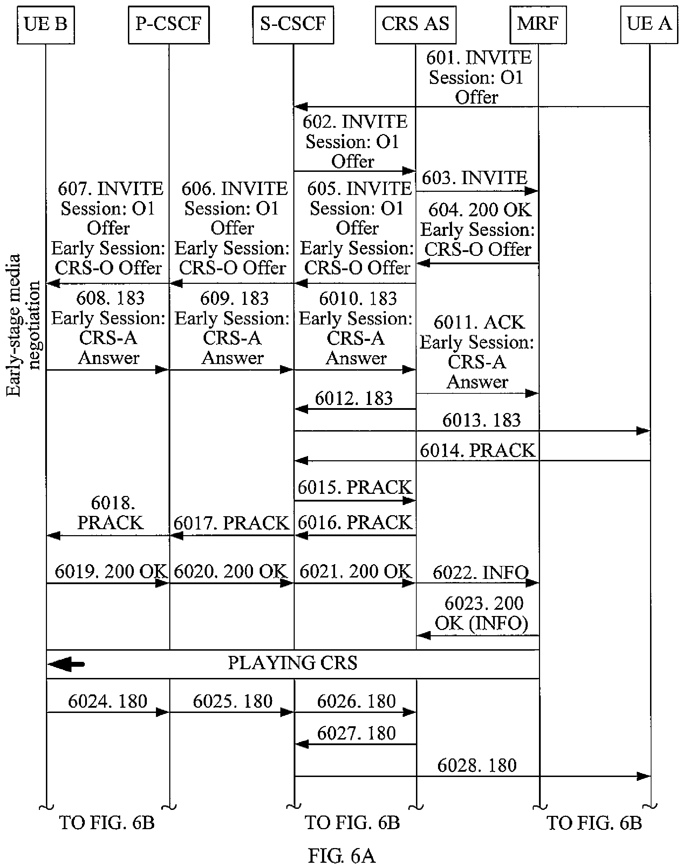

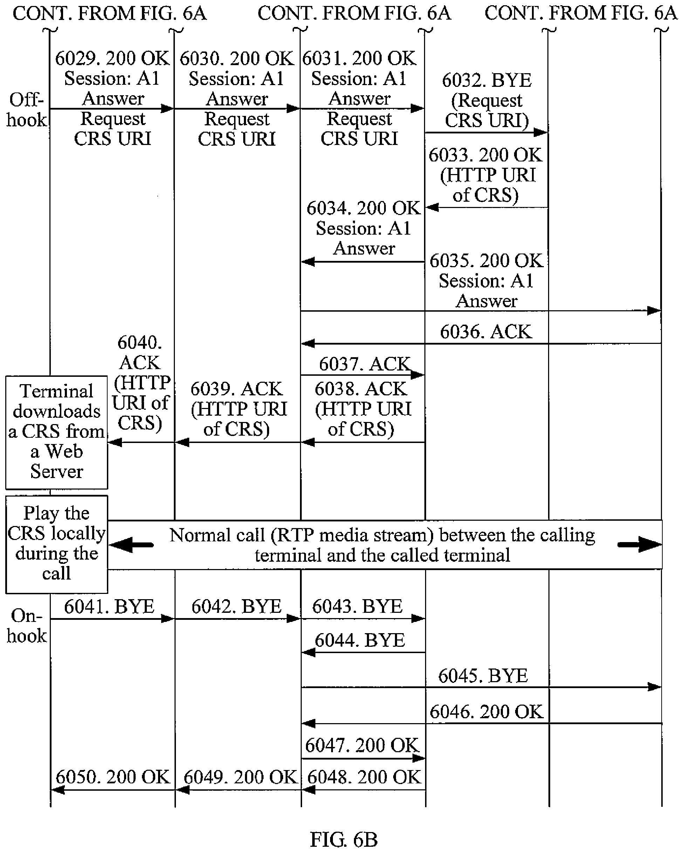

FIGs. 6A and 6B are a schematic diagram of a call process of the embodiment. As shown in FIGs. 6.A and 6B.

Step 601 to step 602: A calling terminal UE-A sends an INVITE request carrying a normal session SDP Offer (O1), so as to establish a call with a called terminal UE-B. The INVITE request first arrives at an S-CSCF, and is routed to a CRS-AS according to an iFC in the S-CSCF.

Step 603 to step 604: The CRS-AS confirms that the UE-A has already subscribed a CRS service for the UE-B, and the CRS-AS sends an INVITE request without an SDP to an MRF. The MRF returns a 200 OK message as a reply. The 200 OK message carries an early-session(Early-session) SDP Offer (CRS-O). The aim is to establish a CRS media stream between the UE-B and the MRF.

Step 605 to step 507: The CRS-AS generates an INVITE request, and the INVITE request arrives at the UE-B via the S-CSCF and a P-CSCF. The INVITE request includes two SDPs: a normal session SDP Offer (O1) and an early-session SDP Offer (CRS-O). Moreover, a Require header field of the INVITE includes an early-session option label.

Step 608 to step 6010: The called terminal UE-B replies the early-session SDP Offer (CRS-O) in the INVITE request, and returns a reliable 183 temporary response. The 183 carries an early-session SDP Answer (CRS-A), and a Require header field of the 183 includes a 100rel option label.

Step 6011: After receiving the 183, the CRS-AS sends an acknowledgment message ACK to the MRF, and the ACK carries the early-session SDP Answer (CRS-A).

Step 6012 to step 6013: The CRS-AS sends the 183 to the S-CSCF, and the S-CSCF forwards the 183 to the calling terminal UE-A.

Step 6014 to step 6018: The UE-A returns a reliable response PRACK in response to the 183, and the PRACK arrives at the UE-B via the S-CSCF, CRS-AS, S-CSCF and P-CSCF.

Step 6019 to step 6021: The UE-B returns an acknowledgment message 200 OK in response to the PRACK, and the 200 OK arrives at the CRS-AS via the P-CSCF and S-CSCF.

Step 6022 to step 6023: The CRS-AS sends an INFO message to the MRF to instruct the MRF to start playing a CRS for the UE-B. The MRF returns a 200 OK message as an acknowledgment and starts playing the CRS. At this time, a called party B hears/watches from the UE-B the CRS customized by a calling party A.

Step6024 to step 6028: The UE-B returns a 180 CRS message, and the 180 CRS message arrives at the UE-A via the P-CSCF, S-CSCF, CRS-AS and S-CSCF.

Step 6029 to step 6031: The called party B answers the call, and the UE-B sends a 200 OK message carrying a normal session SDP Answer (A1). According to the method of the embodiment, the 200 OK message also carries a CRS URI request flag at the same time, where the flag may be carried through a second SDP, Alert-Info/Call-Info header field or an XML file, and arrives at the CRS-AS via the P-CSCF and S-CSCF.

Step 6032 to step 6033: After the CRS-AS receives the 200 OK, the CRS-AS sends a BYE message to the MRF to instruct the MRF to stop playing the CRS. According to the method of the embodiment, the BYE message carries a CRS URI request flag through an SDP, so as to instruct the MRF to send an HTTP URI of the CRS. The MRF returns a 200 OK message in response to the BYE message. According to the method of the embodiment, the 200 OK carries the HTTP URI of the CRS through the SDP or a field of the header field.

Step 6034 to step 6035: The CRS-AS forwards the 200 OK message carrying the normal session SDP Answer (A1), and the 200 OK message arrives at the UE-A via the S-CSCF.

Step 6036 to step 6040: The UE-A returns an acknowledgment message ACK in response to the 200 OK message, and the ACK arrives at the CRS-AS via the S-CSCF. According to the method of the embodiment, the CRS-AS adds the HTTP URI of the CRS to the SDP or the field of the header field in the ACK message, and sends the ACK message to the called terminal UE-B via the S-CSCF and P-CSCF.

At this time, the UE-B downloads the CRS from a third-party Web server through the received HTTP URI of the CRS, and performs local play.

At this time, a normal call between the UE-A and the UE-B is established, and the audio/video call between the calling party and the called party is transmitted through an RTP stream media.

Step 6041 to step 6050: The called party B is on-hook, and the UE-B sends a BYE message to the UE-A. The UE-A returns a 200 OK message to the UE-B. The call ends.

In the embodiment, no mixing demand is raised on both a CRS server and the terminal, and the embodiment is a most economic solution. However, the CRS needs to be downloaded from the Web server, a delay may be caused; and only an audio CRS can be played.

### Example 7

A method in the embodiment is applicable to a bridging manner in a CS domain. A server side performs mixing on a CRS and a call media stream to implement a unidirectional "CRS + call" to a called party.

In the embodiment, when a user of a called terminal is off-hook, the called terminal carries a mixing request flag in a CONNECT message. A CRS Server performs mixing on a CRS and a call media stream from a calling terminal to the called terminal to achieve an objective that the user of the called terminal can enjoy the CRS during a call.

In the embodiment, it is assumed that the user of the called terminal expects that a multimedia content of the CRS can be continuously enjoyed during the call.

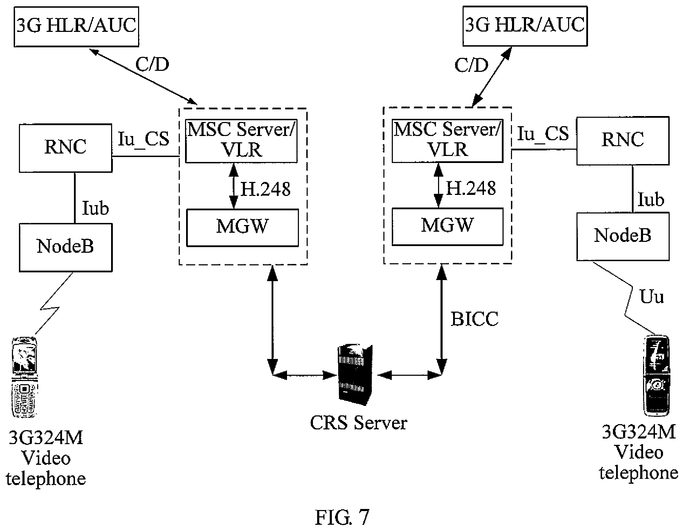

FIG. 7 is a structure diagram of networking of the embodiment, as shown in FIG. 7.

MSC Server (Mobile Switching Center Server) is a Mobile Switching Center Server. The MSC Server is mainly formed by call control and mobile control of an MSC, and is responsible for accomplishing a function, such as call processing, in a CS domain. The MSC Server terminates a user-network signaling, and converts the user-network signaling to a network-network signaling. The MSC Server may control the call state of a part of a media channel in an MGW, where part of a media channel belongs to connection control.

VLR(Visitor Location Register) is a Visitor Location Register. The VLR is a special device of the CS domain, and stores related information of a registered user accessing a control area and provides necessary data of a call connection for a mobile user.

MGW(Media Gateway) is a Media Gateway. The MGW is a transmission termination point of a Public Switched Telephone Network (PSTN)/Public Land Mobile Network (PLMN), and connects a core network and a UTRAN through an Iu interface. The MGW can support media conversion, bearer control and payload processing, for example, a multimedia data signal encoder, an echo canceller, and a conference bridge, etc.

HLR(Home Location Register) is a Home Location Register. The HLR is a public device of the CS domain and a PS domain, and is a database system responsible for managing mobile users. The HLR stores data of all mobile users in the home area, for example, an ID flag, location information, and a subscribed service, etc.

AuC(Authentication Center) is a Authentication Center. The AuC is an entity storing an authentication algorithm and encryption key of a user. The AuC sends authentication and encryption data to the VLR, MSC and an SGSN through the HLR, so as to ensure legitimacy and security of communications.

CRS Server is a Customized Ringing Signal Server. The CRS Server is a core component of a CRS system in the CS domain, and is configured to store service logic of the CRS and play a multimedia resource.

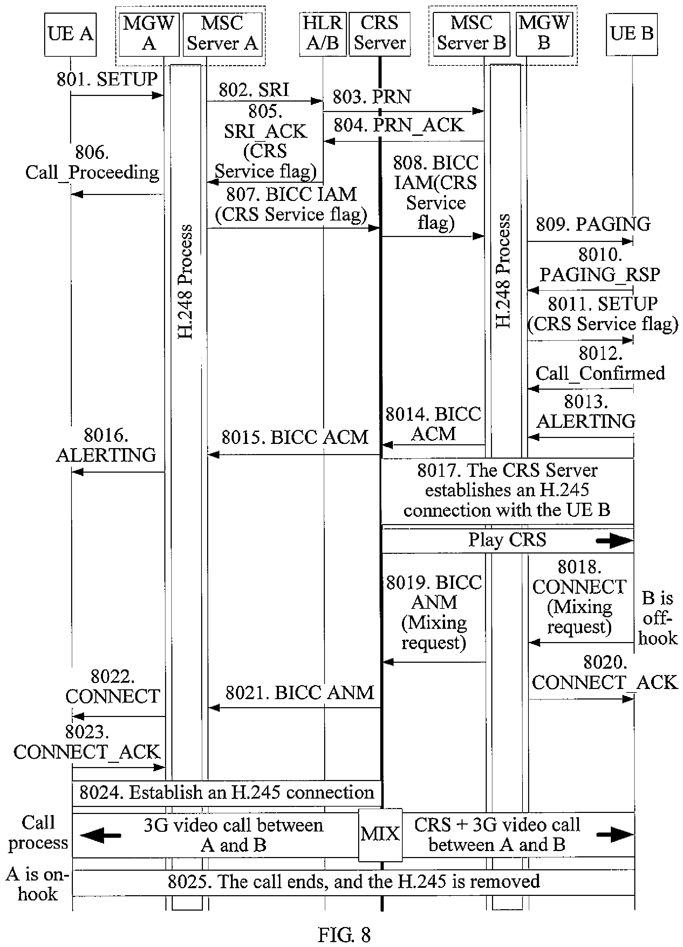

FIG. 8 is a schematic diagram of a call process of the embodiment. As shown in FIG. 8.

Step 801: A calling terminal UE-A sends a SETUP message to a MSC Server A, so as to initialize a call.

Step 802: The MSC Server A initiates an SRI request to an HLR, so as to obtain routing information of a called terminal UE-B.

Step 803: The HLR obtains a roaming number from a VLR in MSC Server B to which the UE-B is attached.

Step 804: The VLR in the MSC Server B returns a PRN_ACK message to the HLR, where the message carries the roaming number of the UE-B.

Step 805: The HLR returns an SRI_ACK message to the MSC Server A, where the message carries routing information and roaming number of the UE-B, and a CRS service flag of a CRS service customized by a user A for a user B.

Step 806: The MSC Server A initiates Call_Proceeding to the UE-A, so as to indicate that the MSC Server A is performing a call operation.

Step 807: The MSC Server A initiates a Bearer Independent Call Control (BICC) Initial Address Message (IAM) message to the CRS Server, so as to establish a circuit connection to the CRS Server, where the IAM message carries the CRS service flag. The CRS Server determines, according to the CRS service flag, the CRS service customized by the user A for the user B.

Step 808: The CRS Server sends a BICC IAM message to the MSC Server B, so as to establish a circuit connection to the MSC Server B, where the IAM message carries the CRS service flag.

Step 809: The MSC Server B initiates a paging request message PAGING to the UE-B.

Step 8010: The UE-B returns a paging response message PAGING_RSP.

Step 8011: The MSC Server B sends a SETUP message to the UE-B, so as to establish a call connection with the called terminal UE-B. The SETUP message carries the CRS service flag. After receiving the CRS service flag, the UE-B suppresses a local CRS and waits for receiving the CRS.

Step 8012: The UE-B returns a Call_Confirmed message, so as to respond to the SETUP message.

Step 8013: The UE-B rings, and returns an ALERTING message to the MSC Server B.

Step 8014 to step 8015: The MSC Server B returns a BICC Address Complete Message (ACM) message to the MSC Server A via the CRS Server, so as to confirm that a corresponding trunk circuit at a called end office is established.

Step 8016: The MSC Server A sends an ALERTING message to the UE-A, and the UE-A generates a CAT.

Step 8017: An H.245 connection is established between the CRS Server and the UE-B, and a media channel is established through an H.245 protocol. At this time, the CRS Server starts playing the CRS for the UE-B.

Step 8018: The called terminal UE-B is off-hook and sends a replay message CONNECT. According to the method of the embodiment, the CONNECT message carries a Mixing request flag, and a specific carrying manner may be that the flag may be carried by a User-to-user cell or a Facility cell of the CONNECT message.

Step 8019: The MSC Server B sends a BICC Answer Message (ANM) to the CRS Server. According to the method of the embodiment, the ANM message carries a Mixing request flag, and the specific carrying manner may be that the flag may be carried by an optional parameter such as the User-to-user or the Facility in an Optional Part of the ANM. The CRS Server triggers a MIX unit in the server according to the received Mixing request flag, and prepares to perform audio mixing/mixing on the CRS and a video call process.

Step 8020: The MSC Server B returns an acknowledgment message CONNECT_ACK to the called terminal UE-B.

Step 8021: The CRS Server sends a BICC ANM message to the MSC Server A.

Step 8022 to step 8023: The MSC Server A sends a CONNECT message to the UE-A, and the UE-A returns a CONNECT_ACK for acknowledgment.

Step 8024: An H.245 connection is established between the UE-A and the CRS Server, and a media channel is established through the H.245 protocol. The calling party and the called party start a conversation.

According to the method of the embodiment, the MIX unit in the CRS Server performs a mixing operation on the CRS and an audio/video call stream from the UE-A to the UE-B, and sends a mixed CRS to the UE-B. However, mixing processing is not performed on an audio/video call stream from the UE-B to the UE-A.

Step 8025: The UE-A is on-hook, and the CRS Server removes the H.245 connection between the UE-A and the UE-B. The call ends.

In step 8018 of the embodiment, except that the mixing request flag is carried by the CONNECT message, the mixing request flag may also be carried by a USER INFORMATION message or a FACILITY message after the CONNECT message is sent.

According to the method of the embodiment, corresponding to Example 4, a solution of converting a CRS to a CBT during a call may also be implemented in the CS domain. Corresponding to Example 5, a solution of downloading a CRS from a Web server and performing local play during a call may also be implemented in the CS domain.

Although the embodiment belongs to a bridging solution in the CS domain, the embodiment may also be extended to a non-bridging solution in the CS domain. Principles are the same, and are not described in detail herein again.

In the embodiment, as a server is used for performing a mixing, a terminal that does not support an IMS domain and does not have a Mix capability can be enabled to continuously play CRS multimedia content during a call.

It should be noted that, Example 3 to Example 7 are provided for situations in which a request terminal is a called terminal, and a CRS is continuously played for the called terminal, or a CRS is continuously played for the calling terminal and the called terminal during a call. A situation of a CAT is similar to that of the CRS. A difference lies in that, for the CAT, a calling terminal is served as the request terminal; a request flag is sent to a CAT-AS, so as to request continuously hearing the CAT during a call; and the CAT-AS triggers continuous play of the CAT during the call according to the request flag sent by the calling terminal. A triggering process is similar to that of the above embodiments, and is not described in detail herein again.

### Example 8

The embodiment of the present invention further provides a multimedia ring tone AS, and the embodiment is described in detail below with reference to the accompanying drawings.

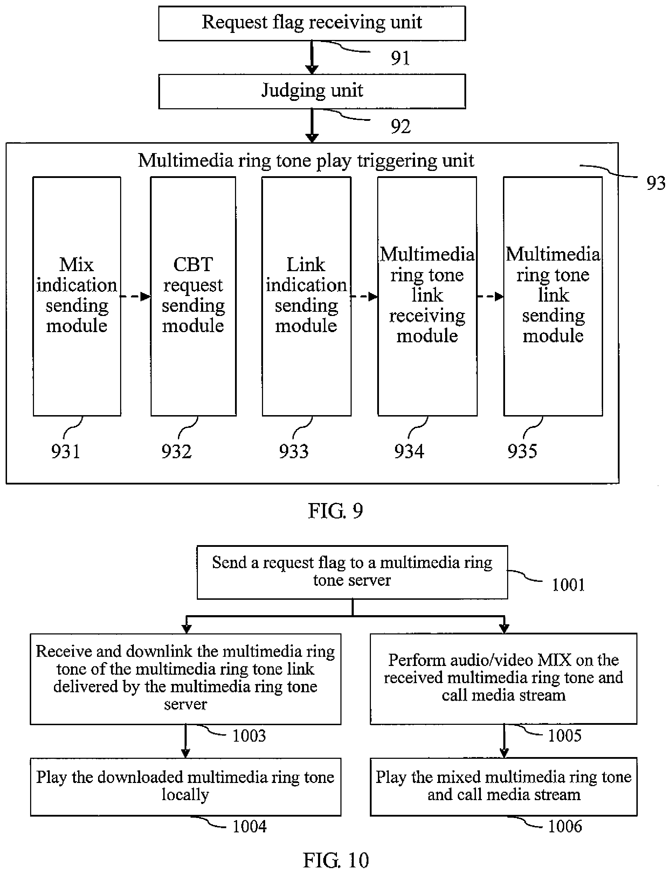

FIG. 9 is a structure block diagram of components of a multimedia ring tone AS of the embodiment. As shown in FIG. 9, the multimedia ring tone AS of the embodiment mainly includes a request flag receiving unit 91, and a multimedia ring tone play triggering unit 93.

The request flag receiving unit 91 is configured to receive a request flag sent by a calling terminal or a called terminal.

The multimedia ring tone play triggering unit 93 is configured to trigger continuous play of a multimedia ring tone during a call according to the request flag.

According to the embodiment, the multimedia ring tone AS may further include a judging unit 92. In the embodiment, the judging unit 92 is configured to judge a type of the request flag according to the request flag received by the request flag receiving unit 91, so that the type of the request flag is provided to the multimedia ring tone play triggering unit 93 for triggering a corresponding process, where the request flag may be a CRS mixing flag, a CAT mixing flag, a CBT mixing flag, a multimedia ring tone downloading link flag, or a terminal Mix capability flag.

According to the embodiment, the multimedia ring tone play triggering unit 93 may include a Mix indication sending module 931. In the embodiment, when a judging result of the judging unit 92 is that the request flag is a CRS mixing flag, the Mix indication sending module 931 sends an indication message carrying the CRS mixing flag to an MRF to instruct the MRF to perform audio mixing/mixing on the CRS and a call media stream from a calling terminal to a called terminal.

In the embodiment, when the judging result of the judging unit 92 is that the request flag is a CAT mixing flag, the Mix indication sending module 931 sends an indication message carrying the CAT mixing flag to the MRF to instruct the MRF to perform audio mixing/mixing on the CAT and a call media stream from the called terminal to the calling terminal.

In the embodiment, when the judging result of the judging unit 92 is that the request flag is a CBT mixing flag, the Mix indication sending module 931 sends an indication message carrying the CBT mixing flag to the MRF to instruct the MRF to perform audio mixing/mixing on the CBT and a call media stream between the called terminal and the calling terminal. The multimedia ring tone play triggering unit 93 may further include a CBT request sending module 932. When the request flag is the CBT mixing flag, after the Mix indication sending module 931 sends the indication message to the MRF, the CBT request sending module 932 sends a CBT request to the calling terminal and the called terminal, so as to negotiate a CBT session.

According to the embodiment, the multimedia ring tone play triggering unit 93 may further include a link indication sending module 933, a multimedia ring tone link receiving module 934 and a multimedia ring tone link sending module 935. In the embodiment, when the judging result of the judging unit 92 is that the request flag is the multimedia ring tone link downloading flag, the link indication sending module 933 sends an indication message carrying the multimedia ring tone link downloading flag to the MRF to instruct the MRF to send a multimedia ring tone link. In the embodiment, when the multimedia ring tone link receiving module 934 receives the multimedia ring tone link returned by the MRF, the multimedia ring tone link sending module 935 sends an acknowledgment message carrying the multimedia ring tone link to a request terminal.

According to the embodiment, when the judging result of the judging unit 92 is that the request flag is the terminal Mix capability flag, the multimedia ring tone play triggering unit 93 triggers a normal call process while the CRS is played, and a request terminal having a Mix capability performs mixing on the received CRS/CAT and the call media stream, and performs local play. It may also be implemented that the request terminal continuously hears the CRS or CAT during the call.

According to the embodiment, the multimedia ring tone AS may also be included in a multimedia ring tone server. The multimedia ring tone server further includes an MRF, where the MRF is configured to perform mixing on the CRS/CAT and the call media stream; and play the CRS and/or mixed CRS; or play the CAT and/or mixed CAT.

Components of the multimedia ring tone server and the multimedia ring tone AS of the embodiment are configured to implement functions of the steps in the methods described above. For example, the multimedia ring tone AS may implement functions of the above CRS-AS, CAT-AS and/or CBT-AS; the multimedia ring tone server may implement functions of the above CRS-AS, CAT-AS and/or CBT-AS, as well as the MRF, which are described in detail above and will not be described herein again.

Through the multimedia ring tone AS of the embodiment, the calling terminal, or the called terminal, or both the calling terminal and the called terminal can be enabled to continuously hear the CRS or CAT during a call, therefore solving a problem in the prior art that the CRS or CAT cannot be continuously played for a user during the call, and a problem of converting the CRS or CAT to the CBT during the call.

### Example 9

The embodiment of the present invention further provides a method for playing a multimedia ring tone during a call, and the embodiment is described in detail below with reference to the accompanying drawings.

FIG. 10 is a flow chart of a method of the embodiment. The method of the embodiment is applicable to a terminal device. As shown in FIG. 10, the method of the embodiment mainly includes the following steps.
1001: Send a request flag to a multimedia ring tone server, where the request flag is used to request the multimedia ring tone server to continuously play a multimedia ring tone.

According to the embodiment, the step of sending the request flag to the multimedia ring tone server may be described as follows.

A CRS mixing flag is sent to the multimedia ring tone server, where the CRS mixing flag is used to request the multimedia ring tone server to perform audio mixing/mixing on a CRS and a call media stream from a calling terminal to a called terminal and play the mixed CRS and call media stream.

According to the embodiment, the step of sending the request flag to the multimedia ring tone server may also be described as follows.

A CAT mixing flag is sent to the multimedia ring tone server, where the CAT mixing flag is used to request the multimedia ring tone server to perform audio mixing/mixing on a CAT and a call media stream from a called terminal to a calling terminal and play the mixed CAT and media stream.

According to the embodiment, the step of sending the request flag to the multimedia ring tone server may also be described as follows.

A CBT mixing flag is sent to the multimedia ring tone server, where the CBT mixing flag is used to request the multimedia ring tone server to perform audio mixing/mixing on a CBT and a call media stream between a calling terminal and a called terminal and play the mixed CBT and call media stream.

According to the embodiment, the step of sending the request flag to the multimedia ring tone server may also be described as follows.

A multimedia ring tone link downloading flag is sent to the multimedia ring tone server, where the multimedia ring tone link downloading flag is used to request the multimedia ring tone server to deliver a multimedia ring tone link, so as to download a multimedia ring tone and perform local play.

In the embodiment, after the step of sending the multimedia ring tone link downloading flag to the multimedia ring tone server, the method further includes the following steps.

Step 1003: Receive and download the multimedia ring tone of the multimedia ring tone link.

Step 1004: Play the downloaded multimedia ring tone locally.

According to the embodiment, the step of sending the request flag to the multimedia ring tone server may also be described as follows.

A terminal Mix capability flag is sent to the multimedia ring tone server, where the terminal Mix capability flag is used to request the multimedia ring tone server to continuously play the multimedia ring tone, perform audio mixing/mixing on the multimedia ring tone and received call media stream, and perform local play.

In the embodiment, after the step of sending the terminal Mix capability flag to the multimedia ring tone server, the method further includes the following steps.

Step 1005: Perform audio mixing/mixing on the received multimedia ring tone and call media stream.

Step 1006: Play the mixed multimedia ring tone and call media stream, so as to implement local play of the multimedia ring tone during the call.

According to the embodiment, the request flag may not be necessarily sent. The calling party or the called party may perform corresponding presetting on the multimedia ring tone server in an out-of-band manner, so that the user can still enjoy the CRS or CAT during the call.

Through the method of the embodiment, the calling terminal, or the called terminal, or both the calling terminal and the called terminal can be enabled to continuously hear the CRS or CAT during the call, therefore solving a problem in the prior art that the CRS or CAT cannot be continuously played for the user during the call, and a problem of converting the CRS or CAT to the CBT during the call.

### Example 10

The embodiment of the present invention further provides a terminal device, and the embodiment is described in detail below with reference to the accompanying drawings.

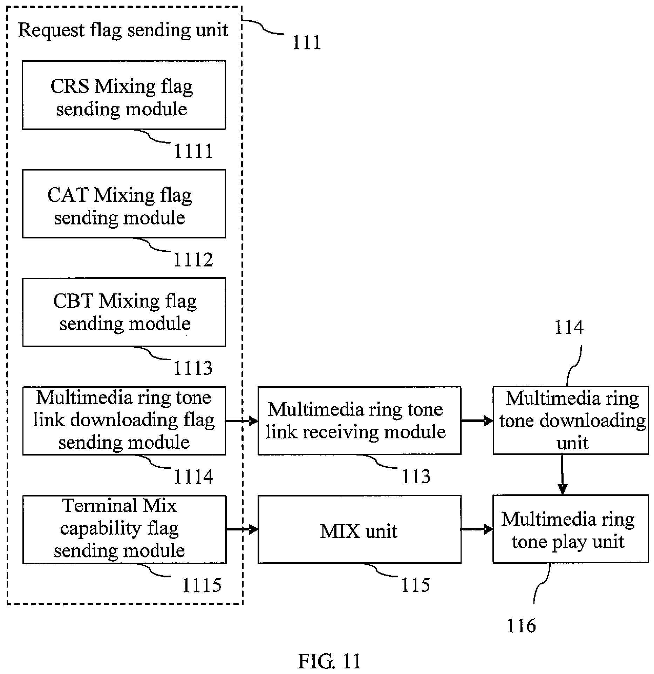

FIG. 11 is a block diagram of components of a terminal device of the embodiment. As shown in FIG. 11, the terminal device of the embodiment mainly includes a request flag sending unit 111, configured to send a request flag to a multimedia ring tone server, where the request flag is used to request the multimedia ring tone server to trigger continuous play of a multimedia ring tone during a call.

According to the embodiment, the request flag sending unit 111 may include:

A CRS mixing flag sending module 1111, which is configured to send a CRS mixing flag to the multimedia ring tone server, where the CRS mixing flag is used to request the multimedia ring tone server to perform audio mixing/mixing on a CRS and a call media stream from a calling terminal to a called terminal and play the mixed CRS and call media stream.

According to the embodiment, the request flag sending unit 111 may include:

A CAT mixing flag sending module 1112, which is configured to send a CAT mixing flag to the multimedia ring tone server, where the CAT mixing flag is used to request the multimedia ring tone server to perform audio mixing/mixing on a CAT and a call media stream from the called terminal to the calling terminal and play the mixed CAT and call media stream.

According to the embodiment, the request flag sending unit 111 may further include:

A CBT mixing flag sending module 1113, which is configured to send a CBT mixing flag to the multimedia ring tone server, where the CBT mixing flag is used to request the multimedia ring tone server to perform audio mixing/mixing on a CBT and a call media stream between the calling terminal and the called terminal and play the mixed CBT and call media stream.

According to the embodiment, the request flag sending unit 111 may further include:

A multimedia ring tone link downloading flag sending module 1114, which is configured to send a multimedia ring tone link downloading flag to the multimedia ring tone server, where the multimedia ring tone link downloading flag is used to request the multimedia ring tone server to deliver a multimedia ring tone link, so as to download a multimedia ring tone and perform local play.

In the embodiment, the terminal device further includes a multimedia ring tone link receiving unit 113, configured to receive the multimedia ring tone link delivered by the multimedia ring tone server; and a multimedia ring tone downloading unit 114, configured to download the multimedia ring tone according to the multimedia ring tone link.

According to the embodiment, the request flag sending unit 111 may further include:

A terminal Mix capability flag sending module 1115, which is configured to send a terminal Mix capability flag to the multimedia ring tone server, where the terminal Mix capability flag is used to request the multimedia ring tone server to continuously play the multimedia ring tone, perform audio mixing/mixing on the multimedia ring tone and received call media stream and perform local play.

In the embodiment, the terminal device further includes a mixing unit 115, configured to perform audio mixing/mixing on the received multimedia ring tone and call media stream.

According to the embodiment, the terminal device further includes:

A multimedia ring tone play unit 116, which is configured to play the multimedia ring tone downloaded by the multimedia ring tone downloading unit 114 or the multimedia ring tone and call media stream that are mixed by the mixing unit 115.

Through the terminal device of the embodiment, the calling terminal, or the called terminal, or both the calling terminal and the called terminal can be enabled to continuously hear the CRS or CAT during the call, therefore solving a problem in the prior art that the CRS or CAT cannot be continuously played for a user during the call, and a problem of converting the CRS or CAT to the CBT during the call.

### Embodiment 1

A networking structure and functions thereof of the embodiment are the same as Example 3, which will not be described in detail herein again. In addition, an application scenario of the embodiment is described as follows: an operator or a user may pre-configure a policy of continuously playing a CAT/CRS during a call on a server. When receiving an off-hook message sent by a called terminal, a CRS-AS instructs an MRF (Multimedia Resource Function) to reserve a corresponding site resource or reserve a resource for audio mixing during the call (note: the CRS-AS may also instruct the MRF to reserve the corresponding site resource or reserve the resource for audio mixing during the call when the CRS-AS receives a call request message from a calling party), and then executes subsequent session updating and audio mixing processes.

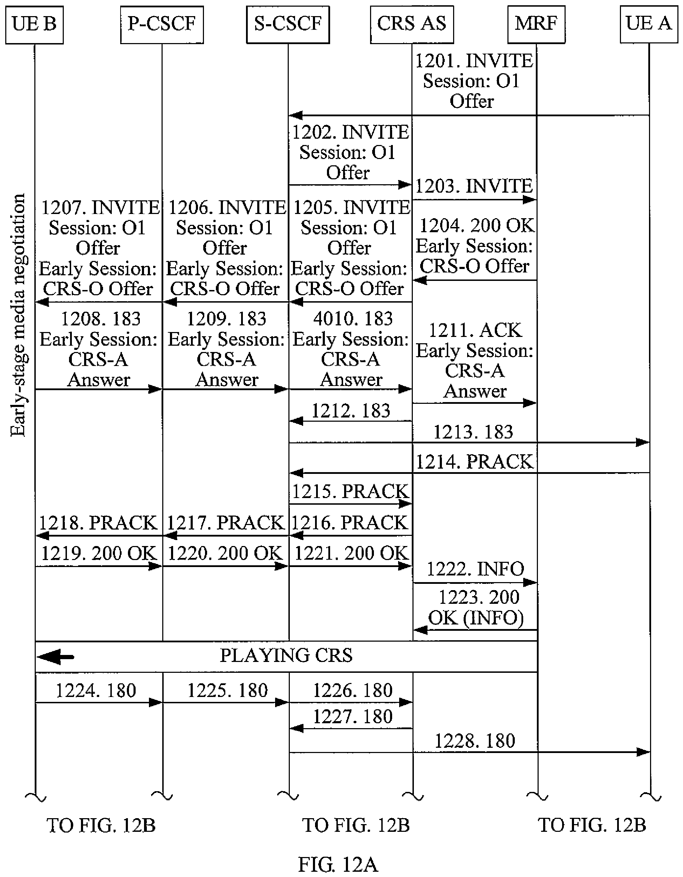

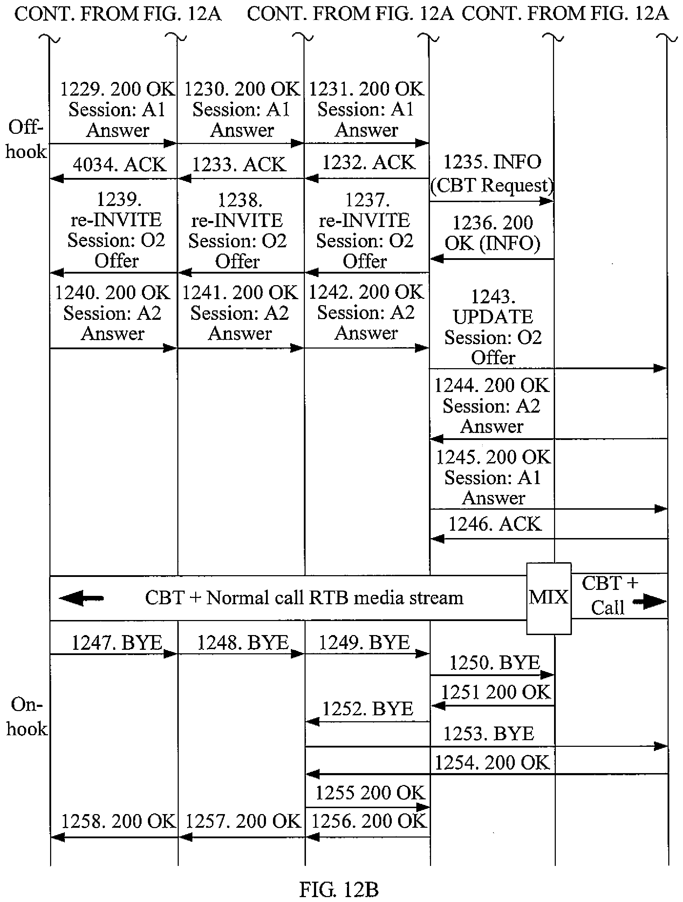

Referring to FIGs. 12A and 12B, a specific process is described as follows.

Step 1201 to step 1228 are the same as step 401 to step 4028 in Example 4, which are not described in detail herein again.

Step 1229 to step 1231: A UE-B sends an off-hook message, where the message arrives at the CRS-AS via a P-CSCF and S-CSCF.

Step 1232 to step 1234: The CRS-AS returns an acknowledgment message to the UE-B.

Step 1235 to step 1236: The CRS-AS requests from an MRF a site resource or a resource for audio mixing during a call. It should be noted that the two steps may also be executed at any time point between step 1202 and step 1231.

Step 1237 to step 1239: The CRS-AS sends a re-INVITE message to the UE-B, where the message carries an Offer SDP generated by the MRF, and both an IP address and a port number in the SDP are pointed to the MRF.

Step 1240 to step 1242: The UE-B returns a response message to the CRS-AS, where the message carries an Answer SDP.

Step 1243: The CRS-AS sends an UPDATE message or a re-INVITE message to a UE-A, where the message carries an Offer SDP generated by the MRF, and both an IP address and a port number in the SDP are pointed to the MRF.

Step 1244: The UE-A returns a response message to the CRS-AS, where the message carries an Answer SDP.

Step 1245: The CRS-AS sends an off-hook message to the UE-A.

Step 1246: The UE-A returns an acknowledgment message to the CRS-AS.

Step 1247 to step 1258 are the same as step 4051 to step 4062 in Example 4, which are not described in detail herein again.

It should noted that, after the CRS-AS receives the acknowledgment message from the UE-A, the CRS-AS instructs the MRF to perform audio mixing processing. At this time, a normal call between the UE-A and the UE-B is established. The MRF serves as a Mixer and is anchored on a call media path between a calling party and a called party. A mixing operation is performed on audios/videos of the calling party/called party and CRS media, and a mixed CRS media is sent to the calling party and the called party. Note: during the call, the MRF may perform bi-directional audio mixing on the CRS media, or may also perform unidirectional audio mixing; the MRF may play the CRS for both the calling party and the called party, or play the CRS for the calling party only, or play the CRS for the called party only.

An advantage of the method provided in the embodiment lies in that, it can be implemented that the multimedia ring tone is continuously played for a user during the call, and the user does not need to be involved in any operation during the call. Brand new experience is brought to the user, which is benefit for implementation and promotion of the technology.

### Embodiment 2

A networking structure and an application scenario of the embodiment are the same as Embodiment 1, which are not described in detail herein again.

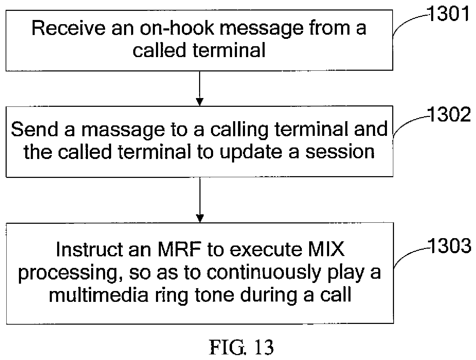

Referring to FIG. 13, a method for playing a multimedia ring tone during a call includes the following steps.

Step 1301: Receive an off-hook message of a called terminal.

A CRS-AS receives the off-hook message of the called terminal.

Step 1302: Send a massage to a calling terminal and the called terminal to update a session.

The CRS-AS sends, to the calling terminal, an update message (UPDATE) or a call request message (re-INVITE) carrying a request (SDP Offer) used for negotiating a new session, and sends, to the called terminal, a call request message (re-INVITE) carrying a request (SDP Offer) used for negotiating a new session. A sequence of sending the message to the calling terminal and sending the message to the called terminal is not restricted, the sending the message to the calling terminal may be performed first, or the sending the message to the called terminal may be performed first, or the sending the message to the calling terminal and the sending the message to the called terminal may be performed at the same time.

Step 1303: Instruct an MRF to execute audio mixing processing, so as to continuously play a multimedia ring tone during a call.

The CRS-AS instructs the MRF to execute audio mixing processing, so as to continuously play the multimedia ring tone during the call. Specifically, the CRS-AS instructs the MRF to perform audio mixing processing on the multimedia ring tone and normal call media, so as to continuously play the multimedia ring tone during the call for the called terminal, or the calling terminal, or both the called terminal and the calling the terminal.

For details of steps of the method, reference may be made to related contents in Embodiment 1 and FIGs. 12A and 12B.

### Embodiment 3

A networking structure and an application scenario of the embodiment are the same as those of Embodiment 1 and Embodiment 2, which are not described in detail herein again.

A multimedia ring tone server provided in the embodiment includes:
a module, configured to receive an off-hook message of a called terminal;
a module, configured to send a message to a calling terminal and the called terminal to update a session; and
a module, configured to instruct an MRF to execute audio mixing processing to continuously play a multimedia ring tone during a call.

Optionally, the multimedia ring tone server may further include:
a module, configured to contact the MRF to request a site resource or a resource for audio mixing during the call before or after the off-hook message of the called terminal is received.

Optionally, the module configured to send the message to the calling terminal and the called terminal to update the session includes one of the following modules:
a module, configured to send, to the calling terminal, an update message or a call request message carrying a request used for negotiating a new media channel, and send, to the called terminal, a call request message carrying a request used for negotiating a new media channel; and
a module, configured to send, to the called terminal, a call request message carrying a request used for negotiating a new media channel, and send, to the calling terminal, an update message or a call request message carrying a request used for negotiating a new media channel.

Optionally, the module configured to instruct the MRF to execute audio mixing processing to continuously play the multimedia ring tone during the call may be specifically configured to instruct the MRF to perform audio mixing processing on the multimedia ring tone and normal call media, so as to continuously play the multimedia ring tone during the call for the called terminal, or the calling terminal, or both the called terminal and the calling the terminal.

For details of steps executed by the modules involved in the embodiment, references may be made to related contents in Embodiment 1 and Embodiment 2 and corresponding accompanying drawings.

An advantage of the method provided in the embodiment lies in that, it can be implemented that the multimedia ring tone is continuously played for a user during the call, and the user does not need to be involved in any operation during the call. Brand new experience is brought to the user, which is benefit for implementation and promotion of the technology.

Through the descriptions of the implementation, it is clear to persons skilled in the art that the present invention may be accomplished through hardware, or through software plus a necessary universal hardware platform. Based on the understanding, the technical solutions of the present invention may be embodied in the form of a software product. The software product may be stored in one nonvolatile storage medium (for example, a CD-ROM, a USB flash drive, or a removable hard disk) and contain several instructions used to instruct a computer equipment (for example, a personal computer, a server, or a network equipment) to perform the method according to the embodiments of the present invention.

The objectives, technical solutions, and beneficial effects of the present invention are described in further detail through the above specific embodiments. It should be understood that the above descriptions are merely exemplary embodiments of the present invention, but not intended to limit the protection scope of the present invention. Any modification, equivalent replacement, or improvement made without departing from principle of the present invention should fall within the protection scope of the present invention.

## Claims

1. A method for playing a multimedia ring tone during a call, wherein the method comprises:
receiving an off-hook message of a called terminal (UE-B); sending a message to a calling terminal (UE-A) and the called terminal to update a session; and
instructing a Multimedia Resource Function, MRF, to execute audio mixing processing to continuously play a multimedia ring tone during the call;
wherein the method further comprises: requesting, by a Customized Ringing Signal-Application Server, CRS-AS, from the MRF a site resource or a resource for audio mixing during a call;
wherein the step of sending comprises:
sending, by the CRS-AS, a re-INVITE message to the called terminal, where the message carries a Session Description Protocol, SDP, Offer generated by the MRF, and both an IP address and a port number in the SDP Offer are pointed to the MRF; and
sending, by the CRS-AS, an UPDATE message to the calling terminal, where the message carries an SDP Offer generated by the MRF, and both an IP address and a port number in the SDP Offer are pointed to the MRF.

2. The method according to claim 1, wherein instructing the MRF to execute audio mixing processing to continuously play the multimedia ring tone during the call comprises:
instructing the MRF to perform audio mixing on the multimedia ring tone and normal call media, so as to continuously play the multimedia ring tone for the called terminal, or the calling terminal, or both the called terminal and the calling terminal during the call.

3. A multimedia ring tone server (CRS-AS), comprising:
a module, configured to receive an off-hook message of a called terminal (UE-B); a module, configured to send a message to a calling terminal (UE-A) and the called terminal to update a session;
a module, configured to instruct a Multimedia Resource Function, MRF, to execute audio mixing processing to continuously play a multimedia ring tone during a call; and
a module configured to request from the MRF a site resource or a resource for audio mixing during a call;
wherein the module configured to send the message to the calling terminal and the called terminal to update the session comprises the following modules:
a module, configured to send a re-INVITE message to the called terminal, where the message carries a Session Description Protocol, SDP, Offer generated by the MRF, and both an IP address and a port number in the SDP Offer are pointed to the MRF; and
a module, configured to send an UPDATE message to the calling terminal, where the message carries an SDP Offer generated by the MRF, and both an IP address and a port number in the SDP Offer are pointed to the MRF.

4. The multimedia ring tone server according to claim 3, wherein the module configured to instruct the MRF to execute audio mixing to continuously play the multimedia ring tone during the call is specifically configured to instruct the MRF to perform audio mixing on the multimedia ring tone and normal call media during the call, so as to continuously play the multimedia ring tone for the called terminal, or the calling terminal, or both the calling terminal and the called terminal.

## Patentansprüche

1. Verfahren zum Abspielen eines Multimedia-Klingeltons während eines Anrufs, wobei das Verfahren Folgendes umfasst:
Empfangen einer Abnahme-Nachricht eines angerufenen Endgeräts (UE-B);
Senden einer Nachricht zu einem anrufenden Endgerät (UE-A) und dem angerufenen Endgerät zum Aktualisieren einer Sitzung und
Anweisen einer Multimedia-Ressourcenfunktion bzw. MRF, eine Audiomischungsverarbeitung auszuführen, um einen Multimedia-Klingelton während des Anrufs kontinuierlich abzuspielen;
wobei das Verfahren ferner Anfordern, durch einen Anwendungsserver für ein kundenspezifisches Rufzeichen bzw. CRS-AS, einer Standortressource oder einer Ressource zum Audiomischen von der MRF während eines Anrufs umfasst;
wobei der Schritt des Sendens Folgendes umfasst:
Senden, durch den CRS-AS, einer re-INVITE-Nachricht zum angerufenen Endgerät, wobei die Nachricht ein Sitzungsbeschreibungsprotokoll-Angebot bzw. SDP-Angebot, das durch die MRF erzeugt wird, führt und sowohl eine IP-Adresse als auch eine Portnummer im SDP-Angebot zur MRF zeigen; und
Senden, durch den CRS-AS, einer UPDATE-Nachricht zum anrufenden Endgerät, wobei die Nachricht ein SDP-Angebot, das durch die MRF erzeugt wird, führt und sowohl eine IP-Adresse als auch eine Portnummer im SDP-Angebot zur MRF zeigen.

2. Verfahren nach Anspruch 1, wobei das Anweisen der MRF, eine Audiomischungsverarbeitung auszuführen, um den Multimedia-Klingelton während des Anrufs kontinuierlich abzuspielen, Folgendes umfasst:
Anweisen der MRF, eine Audiomischung am Multimedia-Klingelton und an normalen Anrufmedien durchzuführen, um den Multimedia-Klingelton für das angerufene Endgerät oder das anrufende Endgerät oder sowohl das angerufene Endgerät als auch das anrufende Endgerät während des Anrufs kontinuierlich abzuspielen.

3. Multimedia-Klingelton-Server (CRS-AS), umfassend:
ein Modul, das zum Empfangen einer Abnahme-Nachricht eines angerufenen Endgeräts (UE-B) konfiguriert ist;
ein Modul, das zum Senden einer Nachricht zu einem anrufenden Endgerät (UE-A) und dem angerufenen Endgerät zum Aktualisieren einer Sitzung konfiguriert ist;
ein Modul, das zum Anweisen einer Multimedia-Ressourcenfunktion bzw. MRF, eine Audiomischungsverarbeitung auszuführen, um einen Multimedia-Klingelton während eines Anrufs kontinuierlich abzuspielen, konfiguriert ist; und
ein Modul, das zum Anfordern einer Standortressource oder einer Ressource zum Audiomischen von der MRF während eines Anrufs konfiguriert ist;
wobei das Modul, das zum Senden der Nachricht zum anrufenden Endgerät und dem angerufenen Endgerät zum Aktualisieren der Sitzung konfiguriert ist, die folgenden Module umfasst:
ein Modul, das zum Senden einer re-INVITE-Nachricht zum angerufenen Endgerät konfiguriert ist, wobei die Nachricht ein Sitzungsbeschreibungsprotokoll-Angebot bzw. SDP-Angebot, das durch die MRF erzeugt wird, führt und sowohl eine IP-Adresse als auch eine Portnummer im SDP-Angebot zur MRF zeigen; und
ein Modul, das zum Senden einer UPDATE-Nachricht zum anrufenden Endgerät konfiguriert ist, wobei die Nachricht ein SDP-Angebot, das durch die MRF erzeugt wird, führt und sowohl eine IP-Adresse als auch eine Portnummer im SDP-Angebot zur MRF zeigen.

4. Multimedia-Klingelton-Server nach Anspruch 3, wobei das Modul, das zum Anweisen der MRF, eine Audiomischung auszuführen, um den Multimedia-Klingelton während des Anrufs kontinuierlich abzuspielen, konfiguriert ist, spezifisch zum Anweisen der MRF, eine Audiomischung am Multimedia-Klingelton und an normalen Anrufmedien während des Anrufs durchzuführen, konfiguriert ist, um den Multimedia-Klingelton für das angerufene Endgerät oder das anrufende Endgerät oder sowohl das anrufende Endgerät als auch das angerufene Endgerät kontinuierlich abzuspielen.

## Revendications

1. Procédé de lecture d'une sonnerie multimédia pendant un appel, le procédé comportant les étapes consistant à :
recevoir un message de décrochage d'un terminal appelé (UE-B) ;
envoyer un message à un terminal appelant (UE-A) et au terminal appelé pour mettre à jour une session ; et
donner comme consigne à une fonction de ressources multimédia, MRF, d'exécuter un traitement de mixage audio pour lire en continu une sonnerie multimédia pendant l'appel ;
le procédé comportant en outre l'étape consistant à :
faire demander à la MRF, par un serveur d'application de signal de sonnerie personnalisée, CRS-AS, une ressource de site ou une ressource pour mixage audio pendant un appel ;
l'étape d'envoi comportant les étapes consistant à :
faire envoyer, par le CRS-AS, un message INVITE réitéré au terminal appelé, le message transportant une offre de protocole de description de session, SDP, générée par la MRF, et une adresse IP et un numéro de port figurant dans l'offre SDP pointant tous deux vers la MRF ; et
faire envoyer, par le CRS-AS, un message UPDATE au terminal appelant, le message transportant une offre SDP générée par la MRF, et une adresse IP et un numéro de port figurant dans l'offre SDP pointant tous deux vers la MRF.

2. Procédé selon la revendication 1, le fait de donner comme consigne à la MRF d'exécuter un traitement de mixage audio pour lire en continu la sonnerie multimédia pendant l'appel comportant l'étape consistant à :
donner comme consigne à la MRF d'effectuer un mixage audio sur la sonnerie multimédia et des média normaux d'appel, de façon à lire en continu la sonnerie multimédia pour le terminal appelé, ou le terminal appelant, ou à la fois le terminal appelé et le terminal appelant pendant l'appel.

3. Serveur de sonnerie multimédia (CRS-AS) comportant :
un module configuré pour recevoir un message de décrochage d'un terminal appelé (UE-B) ;
un module configuré pour envoyer un message à un terminal appelant (UE-A) et au terminal appelé afin de mettre à jour une session ;
un module configuré pour donner comme consigne à une fonction de ressources multimédia, MRF, d'exécuter un traitement de mixage audio pour lire en continu une sonnerie multimédia pendant un appel ; et
un module configuré pour demander à la MRF une ressource de site ou une ressource pour mixage audio pendant un appel ;
le module configuré pour envoyer le message au terminal appelant et au terminal appelé afin de mettre à jour la session comportant les modules suivants :
un module configuré pour envoyer un message INVITE réitéré au terminal appelé, le message transportant une offre de protocole de description de session, SDP, générée par la MRF, et une adresse IP et un numéro de port figurant dans l'offre SDP pointant tous deux vers la MRF ; et
un module configuré pour envoyer un message UPDATE au terminal appelant, le message transportant une offre SDP générée par la MRF, et une adresse IP et un numéro de port figurant dans l'offre SDP pointant tous deux vers la MRF.

4. Serveur de sonnerie multimédia selon la revendication 3, le module configuré pour donner comme consigne à la MRF d'exécuter un mixage audio pour lire en continu la sonnerie multimédia pendant l'appel étant spécifiquement configuré pour donner comme consigne à la MRF d'effectuer un mixage audio sur la sonnerie multimédia et des média normaux d'appel pendant l'appel, de façon à lire en continu la sonnerie multimédia pour le terminal appelé, ou le terminal appelant, ou à la fois le terminal appelant et le terminal appelé.
